# EUROPÄISCHE PATENTSCHRIFT

(11) **EP 2 463 047 B1**
(45) Veröffentlichungstag und Bekanntmachung des Hinweises auf die Patenterteilung: **20.11.2013**
(21) Anmeldenummer: 10194704.2
(22) Anmeldetag: 13.12.2010
(51) Int. Cl.: B23B 51/00

(54) **Hinterschneidwerkzeug**
Undercutting tool
Outil de coupe pour contre-dépouille

(43) Veröffentlichungstag der Anmeldung: 13.06.2012
(73) Patentinhaber: Hasler, Josef, 9452 Hinterforst (CH)
(72) Erfinder: Hasler, Josef, 9452 Hinterforst (CH)
(74) Vertreter: Kaminski Harmann

(56) Entgegenhaltungen:
- DE-A1- 2 928 555
- DE-A1- 19 609 798
- US-A- 2 247 283

## Beschreibung

Die Erfindung betrifft ein Hinterschneidwerkzeug nach dem Oberbegriff des Anspruchs 1 zur Erzeugung von Querrillen in einem Bohrloch.

Im Bereich der Bautechnik ist aus dem Stand der Technik bekannt, dass mittels konventioneller Bohrer, insbesondere Betonbohrer, zylindrische Löcher, insbesondere Sacklöcher, mit einem typischen Durchmesser von 10 mm bis über 25 mm in Beton oder Stein gebohrt werden und in diesen Löchern Dübel, Armierungseisen und Betonanker etc. mittels aushärtender Stoffe, insbesondere Adhäsionsmitteln verankert werden. Ein Problem im Stand der Technik besteht darin, dass die Innenflächen einer Bohrung in Beton oder Stein verhältnismässig glatt ist und das Adhäsionsmittel, z. B. Klebstoff, flüssiger Beton etc., keinen ausreichenden Halt bzw. keine ausreichend grosse Wechselwirkungsfläche auf einer solchen glatten Innenfläche einer Bohrung findet. Dies führt inhärent zu einer potentiellen Instabilität insbesondere gegenüber Axial-Zugkräften.

Zur Verbesserung des Halts von in Bohrungen beispielsweise zu verklebenden Komponenten wie Tragelementen, Haken, Armierungen und dergleichen und insbesondere zur Verbesserung ihrer gegen Axial-Zugkräfte stabilen Einbringung ist es daher notwendig, die Wechselwirkungsfläche zwischen der Lochwandung und dem Adhäsionsmittel zu vergrössern. Dies kann durch Aufrauung der Oberfläche und insbesondere durch die Erzeugung von Querrillen in einer Bohrung geschehen.

Aus dem Stand der Technik sind zur Erzeugung von Querrillen in einem vorher geschaffenen Bohrloch Hinterschneidwerkzeuge bekannt, welche mittels eines Spreizmechanismus eine Axialkraft in eine Radialkraft umwandeln. Schneidelemente werden mit der Radialkraft radial gegen die Bohrlochwandung gedrückt, so dass bei Rotation Querrillen bzw. Hinterschneidungen in der Bohrlochwandung erzeugt werden können.

Dabei sind sowohl erstens Lösungen bekannt, bei denen ein Hinterschneidwerkzeug zur Definition einer Arbeitsposition am Ende eines Sacklochs, also am Boden des Lochs abgestützt wird, als auch zweitens solche Lösungen, bei denen das Hinterschneidwerkzeug an der das zu bearbeitenden Loch umgebenden Oberfläche abgestützt wird.

Eine Lösung der ersten Art wird beispielsweise in der DE 196 09 798 offenbart. Das darin beschriebene Bohrwerkzeug umfasst einen zylindrischen Aufnahmekörper mit einem unrunden Führungskanal, radial nach aussen offenen Durchtrittsöffnungen, zwei nach aussen radial durch diese Durchtrittsöffnungen verschiebbare Schneidelemente und einen Schieber mit einem unrunden Querschnitt. Der Schieber ragt wenigstens teilweise in den Führungskanal des Aufnahmekörpers hinein, durchsetzt Durchgangsbohrungen der Schneidelemente, ist gegen die Kraft einer Feder entgegen der Bohrrichtung verschiebbar und dient dem radialen Verschieben der Schneidelemente. Mehrere hintereinander angeordnete Führungsbereiche des Schiebers weisen eine Führungskante, Anschlagkanten sowie sich entgegen der Bohrrichtung verjüngende wie auch sich entgegen der Bohrrichtung erweiternde Gleitflächen auf, entlang derer die Schneidelemente gleiten können. Der Schieber wird an einem Grund einer Sacklochbohrung abgestützt.

Bei einer Versetzung des Aufnahmekörpers in Bohrrichtung gegenüber dem am Sacklochende abgestützten Schieber ergibt sich durch Gleiten von Schneidelementen entlang einer Gleitfläche eine radiale Versetzung des Schneidelements aus einer Ausgangsposition, bei der die Schneidelemente die Aussenkontur des Aufnahmekörpers nicht überragen, in eine die Aussenkontur des Aufnahmekörpers überragende Arbeitsposition, in der durch Rotation des Werkzeugs Querrillen in das Bohrloch geschnitten werden.

Das Bohrwerkzeug gemäss der DE 196 09 798 beruht also auf der Umsetzung einer Axialkraft in eine Radialkraft, wobei der Schieber mit unrundem Querschnitt die Funktion eines Spreizelements hat. Jedoch wirkt die Art der Umsetzung des Zusammenwirkens von Schieber und Schneidelementen in mehrfacher Hinsicht nachteilig: Zum einen haben die Schneidelemente aufgrund der Durchgangsbohrungen der Schneidelemente für den Schieber ein gewisses Spiel. Dieses kann leicht zu einem Verhaken der Schneidelemente mit der Wandung eines Bohrlochs, durch Abweichung von der vorgesehenen genau radialen Ausrichtung unter Kraftbeanspruchung, führen. Zum anderen kann es bei der Zurückführung der Schneidelemente nach Aufhebung der axial wirkenden Kraft aufgrund einer nur trägen Rückbewegungen zu Beschädigungen, beispielsweise sich axial erstreckende Schneid- oder Schleifspuren im Bohrloch, kommen. Ausserdem ist die beschriebene Umsetzung von Axialkraft in Radialkraft relativ ineffizient, da sich die Gleitflächen graduell in Bohrrichtung verjüngen oder erweitern, aber über grössere Bereiche nahezu parallel zur Bohrrichtung erstrecken, in denen zwar durch das Einwirken der Fliehkraft eine Radialbewegung der Schneidelemente verursacht wird, aber keine aktive Umsetzung von Axialkraft in Radialkraft erfolgt. Aufgrund der Ausgestaltung der Schneidelemente mit Durchtrittsöffnungen für den Schieber ist ihre mechanische Stabilität zudem relativ gering, so dass sie unter Kraftbeanspruchung leicht brechen können.

Eine technische Lösung der zweiten Art, also mit Abstützung des Hinterschneidwerkzeugs an der das zu bearbeitende Bohrloch umgebenden Oberfläche, wird in der DE 29 28 555 offenbart. Dieses Dokument beschreibt ein Hinterschneidwerkzeug mit Schneidelementen, die durch axialen Druck auf einen rotierbaren Werkzeugschaft mittels eines axial verschiebbaren Spreizelements in radialer Richtung auslenkbar sind. Das Spreizelement ist als eine Spindel mit in axialer Richtung schräg verlaufend ausgebildeten Anlaufflächen ausgebildet. Die Schneidelemente weisen in axialer Richtung verlaufende Schrägflächen auf, die an den Anlaufflächen des spindelförmigen Spreizelementes entlang gleiten können. Das axial bewegliche Spreizelement ist von einer in axialer Richtung unbeweglichen Bohrhülse umgeben, welche im Bereich der Schneidelemente Ausnehmungen bzw. Öffnungen aufweist, in denen die Schneidelemente, im Wesentlichen ohne axiales Spiel, aber in radialer Richtung bewegbar gehalten sind. Durch Bewegung des spindelförmigen Spreizelements in axialer Richtung werden die mit ihren Schrägflächen an den Anlaufflächen des Spreizelements entlanggleitenden Schneidelemente, welche nach aussen weisende Schneidkanten aufweisen, radial nach aussen getrieben, so dass sie dann im ausgetriebenen Zustand eine Hinterschneidung in dem Bohrloch erzeugen können.

Auch diese Lösung weist verschiedene Nachteile auf, die ebenfalls bedingt durch die Auftrennung der Funktionalität von Spreizelement und Schneidelement in zwei diskrete Komponenten bedingt sind. Sowohl das spindelförmige Spreizelement, als auch die an deren Anlaufflächen mit ihren axial ausgerichteten Schrägflächen gleitfähigen Schneidelemente unterliegen einer starken mechanischen Beanspruchung, da durch diese Art des Zusammenwirkens eine Axialkraft nur unvollständig in eine Radialkraft umgewandelt und zu einem erheblichen Teil in eine Reibungskraft zwischen diesen Flächen umgesetzt wird. Ausserdem kann es bei der Rückführung der Schneidelemente durch axialen Rückzug des Spreizelements auch hier durch Trägheit oder ein leichtes Verkannten zu Beschädigungen am Werkzeug oder der zu bearbeiteten Bohrlochwandung kommen.

Gemein ist den bekannten Lösungen im Stand der Technik, dass die axial verteilten Schneidelemente nicht unabhängig voneinander radial beweglich sind. Wird die radiale Beweglichkeit eines Schneidelements blockiert, beispielsweise weil die Wand der Bohrung in einem Bereich härter ist als in einem anderen Bereich - insbesondere aufgrund eines Armierungseisens oder eines Unstetigkeit im Material in der Bohrlochwand, wird bei den Lösungen im Stand der Technik auch die radiale Beweglichkeit der restlichen, an sich nicht blockierten Schneidelemente verhindert.

Aufgabe der vorliegenden Erfindung ist die Bereitstellung eines verbesserten Hinterschneidwerkzeugs, mit dem die aufgeführten technischen Nachteile bekannter gattungsgemässer Werkzeuge vermieden werden können. Eine Teilaufgabe besteht in einer effizienteren Umwandlung von Axialkraft in Radialkraft. Eine weitere Teilaufgabe ist die Vermeidung des Verhakens der Schneidelemente mit der Bohrlochwandung. Eine weitere Teilaufgabe stellt die schnelle und fehlerfreie Rückführung der Schneidelemente aus ihrer Arbeitsposition in ihre Ruheposition bei Beenden der einwirkenden Axialkraft dar. Eine weitere Teilaufgabe besteht darin, dass die Scheidelemente unabhängig voneinander scheiden können und durch das radiale Blockieren eines Schneidelements, beispielsweise durch ein in die Bohrung hineinragendes Armierungseisen, nicht die restlichen Schneidelemente in ihrer Schneidfunktion gehindert werden. Ausserdem soll das Hinterschneidwerkzeug gemäss einer weiteren Teilaufgabe einfacher wartbar sein und für den Bedarfsfall ein schnelles und einfaches Ersetzen verschlissener Schneidelemente ermöglichen.

Diese Aufgaben werden durch den Gegenstand des unabhängigen Anspruchs gelöst. Merkmale, die die Erfindung in alternativer oder vorteilhafter Weise weiterbilden, sind den abhängigen Patentansprüchen zu entnehmen.

Das erfindungsgemässe Hinterschneidwerkzeug dient insbesondere zur Erzeugung von Querrillen in einem Bohrloch, wobei die Querrillen zumindest teilweise Hinterschneidungen im Bohrloch und somit eine Angriffsfläche für im Bohrloch zu verankernde Elemente bilden. Die Querrillen können im Verhältnis zum Durchmesser des Bohrlochs einen kleinen Querschnitt unter einem Zwanzigstel oder einen grossen Querschnitt über einem Fünftel haben. Die Rillen können somit lediglich eine Aufrauung oder wesentliche Hinterschneidungen bilden.

Das Hinterschneidwerkzeug hat eine geometrische Längsachse, die sich mittig entlang dem langgestreckten, insbesondere im Wesentlichen zylindrischen Werkzeug erstreckt. Diese geometrische Achse definiert zwei einander entgegengesetzte Richtungen, nämlich eine axiale Richtung und eine dieser axialen Richtung entgegengesetzte axiale Richtung, die im Folgenden als die "entgegengesetzte axiale Richtung" bezeichnet wird. Vom axialen Mittelpunkt des Hinterschneidwerkzeugs betrachtet weist die axiale Richtung zum unteren Ende des Werkzeugs und die entgegengesetzte axiale Richtung zum oberen Ende des Werkzeugs. Unter den Begriffen "unten" und "oben" ist daher keine absolute, auf das Gravitationsfeld der Erde bezogene Lage zu verstehen, sondern die relative Lage entlang der geometrischen Längsachse, wobei ein unterer Abschnitt relativ zu einem oberen Abschnitt in axialer Richtung liegt. Die Richtung von oben nach unten ist also die axiale Richtung, und die Richtung von unten nach oben die entgegengesetzte axiale Richtung, unabhängig von der absoluten Lage des Hinterschneidwerkzeugs im Gravitationsfeld.

Das Hinterschneidwerkzeug weist einen Schaft auf, mit einem oberes Schaftende, das in die entgegengesetzte axiale Richtung weist, und einem unteren Schaftende, das in die axiale Richtung weist. Der Schaft kann einteilig oder mehrteilig ausgebildet sein. Unter dem Schaft ist allgemein ein sich entlang der geometrischen Längsachse erstreckender länglicher Körper zu verstehen. Der Schaft kann in einer speziellen Ausführungsform eine im Wesentlichen zylindrische Form aufweisen.

Das obere Schaftende ist drehfest mit einer rotatorischen Antriebsmaschine, insbesondere einer Bohrmaschine, verbindbar, um den Schaft in Rotation um die Längsachse versetzen zu können. Das obere Schaftende besitzt allgemein eine Form, die sich zum Einspannen in eine rotatorische Antriebsmaschine, insbesondere in ein Bohrfutter, ein Einsteckfutter, beispielsweise ein SDS-Futter, oder ein Spannfutter eignet. Vorzugsweise hat das obere Schaftende einen im Wesentlichen zylindrischen Querschnitt, gegebenenfalls mit mindestens einer axialen Nut und/oder Abflachung zur Vermeidung vom Schlupf im eingespannten Zustand. Unter dem oberen Schaftende ist allgemein ein oberer Abschnitt des Schafts zu verstehen.

Zwischen dem oberen Schaftende und dem unteren Schaftende liegt ein Aufnahmebereich des Schafts, der zur Aufnahme von Spreizelementen bestimmt ist. Dieser Aufnahmebereich wird von einer oberen Abstützung des Hinterschneidwerkzeugs und einer unteren Abstützung des Hinterschneidwerkzeugs jeweils axial begrenzt. Vom Inneren des Aufnahmebereichs aus betrachtet begrenzt die obere Abstützung den Aufnahmebereich in der entgegengesetzten axialen Richtung, während die untere Abstützung, die axial zur oberen Abstützung beabstandet ist, den Aufnahmebereich in der axialen Richtung begrenzt. Die untere Abstützung ist in einer speziellen Ausführungsform am unteren Schaftende oder nahe dem unteren Schaftende angeordnet.

Mindestens zwei als hülsenförmige Hohlkörper ausgebildete Spreizelemente sind axial verteilt im Aufnahmebereich angeordnet und umschliessen im Aufnahmebereich jeweils rings den Schaft. Zwischen den Spreizelementen und dem Aufnahmebereich des Schafts besteht jeweils ein radiales Spiel in jeweiliger radialer Richtung senkrecht zur Längsachse. In anderen Worten ist der Innenquerschnitt der als hülsenförmige Hohlkörper ausgebildeten Spreizelemente zumindest in einer radialen Richtung derart grösser als der korrespondierende Aussenquerschnitt des Aufnahmebereichs, dass jeweils ein radiales Spiel in jeweils einer radialen Richtung, die senkrecht zur Längsachse verläuft, besteht. Die Spreizelemente besitzen jeweils mindestens einen Schneidzahn, der im Wesentlichen in diejenige radiale Richtung nach aussen weist, entlang welcher das jeweilige Spreizelement das radiale Spiel aufweist. Der jeweilige mindestens eine Schneidzahn ist vorzugsweise aus einem harten Material, insbesondere aus Hartmetall, Schellarbeitsstahl, Keramik, Saphir oder Diamant, ausgebildet. Entweder ist der jeweilige Schneidzahn mit dem jeweiligen Spreizelement gekoppelt oder der Schneidzahn und das Spreizelement sind einstückig ausgebildet ist, wobei in diesem Falle vorzugsweise beide aus dem gleichen Material, vorzugsweise einem harten Metall, bestehen.

Erfindungsgemäss ist der Schaft derart ausgebildet und die obere Abstützung und die untere Abstützung sind derart angeordnet, dass der axiale Abstand zwischen der oberen Abstützung und der unteren Abstützung durch Ausüben einer in die axiale Richtung gerichteten axialen Kraft auf das obere Schaftende, insbesondere rückfedernd, verringerbar ist. In anderen Worten ist das Hinterschneidwerkzeug derart ausgebildet, dass der axiale Abstand zwischen der oberen Abstützung und der unteren Abstützung variabel ist, wobei dieser Abstand durch Ausüben einer nach unten gerichteten Kraft auf das obere Schaftende, die insbesondere, aber nicht notwendigerweise, einer Federkraft entgegenwirkt, verkleinert wird. Die der axialen Kraft auf das obere Schaftende entgegenwirkende Kraft kann durch ein Abstützen des Hinterschneidwerkzeugs auf den Boden bzw. auf das Ende des Sacklochs oder auf der das zu bearbeitende Loch umgebenden Oberfläche aufgebracht werden. Abhängig von der Art der Abstützung ergeben sich unterschiedliche Möglichkeiten, den axialen Abstand zwischen den Abstützungen in Abhängigkeit von der axialen Kraft variabel zu gestalten. So ist es beispielsweise möglich, die untere Abstützung mit einem unteren Ende des Hinterschneidwerkzeugs, beispielsweise dem unteren Schaftende oder einem unteren Bodenelement, zu koppeln und die obere Abstützung mit dem oberen Schaftende zu koppeln, wobei zwischen der oberen und der unteren Abstützung eine axiale Nachgiebigkeit geschaffen wird. Diese axiale Nachgiebigkeit kann beispielsweise durch eine Teleskopanordnung oder eine elastische Verformbarkeit, beispielsweise des Schafts, erreicht werden. Mögliche Anordnungen werden im Folgenden genauer beschrieben.

Die Spreizelemente sind axial verschiebbar im axialen Erstreckungsbereich zwischen der oberen Abstützung und der unteren Abstützung im Aufnahmebereich angeordnet. Die Spreizelemente sind rotatorisch mit dem oberen Schaftende gekoppelt. In anderen Worten sind die Spreizelemente durch das in Rotation Versetzen des oberen Schaftendes ebenfalls im Wesentlichen um die Längsachse in Rotation versetzbar. Hierzu sind sie verdrehgesichert im Aufnahmebereich angeordnet. Diese Verdrehsicherung kann beispielsweise erstens verwirklich werden, indem eine direkte rotatorische Kopplung zwischen den Spreizelementen und dem Aufnahmebereich des Schafts, der wiederum rotatorisch mit dem oberen Schaftende gekoppelt ist, besteht. Diese rotatorische Kopplung kann mittels eines Formschlusses erzielt werden, indem der Innenquerschnitt der Spreizelemente und der Aussenquerschnitt des Aufnahmebereichs derart ineinandergreifen, dass die Spreizelemente umdrehungsgesichert auf dem Aufnahmebereich sitzen. Zweitens besteht die Möglichkeit, die Spreizelemente mit der oberen Abstützung und/oder mit der unteren Abstützung rotatorisch zu koppeln, wobei die obere Abstützung bzw. die untere Abstützung wiederum rotatorisch mit dem oberen Schaftende, das von der Antriebsmaschine antreibbar ist, gekoppelt ist. Diese rotatorische Kopplung kann insbesondere über schräge Stirnflächen der Spreizelemente und der oberen und/oder unteren Abstützung erfolgen.

Unter verdrehgesichert und rotatorisch gekoppelt ist allgemein zu verstehen, dass keine beliebige mehrfache relative Umdrehung zwischen zwei Elementen uneingeschränkt möglich ist. Diese Verdrehsicherung bzw. rotatorische Kopplung kann optional nur in einer Umdrehungsrichtung besteht, nämlich in der Umdrehungsrichtung der Antriebsmaschine. Unter verdrehgesichert und rotatorisch gekoppelt ist nicht zwangsläufig eine drehstarre Kopplung zu verstehen, da ein Drehspiel und/oder ein Schlupf möglich sind, solange die Antriebsmaschine das entsprechende Element, gegebenenfalls nach einer Vielzahl an Umdrehungen und gegebenenfalls unter Schlupf, in Rotation versetzen kann.

Die axiale Verschiebbarkeit der Spreizelemente innerhalb des Aufnahmebereichs des Schafts ist durch die obere Abstützung in die entgegengesetzte axiale Richtung und durch die untere Abstützung in die axiale Richtung begrenzt. Durch ein Verringern des Abstands der Abstützungen zueinander werden die Spreizelemente zusammengedrückt. In anderen Worten verringert sich der axiale Abstand der Spreizelemente zueinander. Die axiale Verschiebbarkeit der Spreizelemente dient somit insbesondere dazu, dass der axiale Abstand der Spreizelemente bei Verringern des axialen Abstands der Abstützungen zueinander verringert werden kann, wodurch sich die Spreizelemente ineinander verschränken können.

Die mindestens zwei Spreizelemente weisen jeweils sowohl eine schräge obere Stirnfläche, als auch eine schräge untere Stirnfläche auf. Die schräge obere Stirnfläche weist nach oben, also in die entgegengesetzte axiale Richtung, wohingegen die schräge untere Stirnfläche nach unter, also in die axiale Richtung weist. Unter einer schrägen Stirnfläche ist allgemein eine Fläche eines Spreizelements zu verstehen, die sich nicht-senkrecht und nicht-parallel zur Längsachse erstreckt. In anderen Worten wird eine schräge Stirnfläche jeweils von einer geometrischen Längsebene, auf welcher die Längsachse liegt und die parallel zur jeweiligen radialen Richtung verläuft, in einer Schnittgerade geschnitten, die nicht-senkrecht zur Längsachse steht und die Längsachse mit einem Schnittwinkel, dessen Winkelbetrag kleiner als 90°, aber grösser als 0° ist, schneidet. Die jeweilige Stirnfläche verläuft in Richtung parallel zu dieser jeweiligen Schnittgerade gerade, so dass zwei korrespondierende, aufeinander liegende Stirnflächen entlang dieser jeweiligen Schnittgerade gleiten können. Die Stirnflächen erstrecken sich somit in zur Längesachse nicht-senkrechter Richtung. In einer speziellen Ausführungsform verläuft jede Stirnfläche ausserdem in Richtung senkrecht zu der Längsebene gerade, so dass jede Stirnfläche jeweils auf einer geometrischen Ebene verläuft. In einer anderen Ausführungsform ist die jeweilige Stirnfläche wellig oder abgestuft, wobei sich die Welligkeit bzw. Abstufung in Richtung senkrecht zur Längsebene erstreckt.

In einer besonderen Ausführungsform der Erfindung sind die Spreizelemente als beidseitig schräg abgeschnittene Zylinder, nämlich Hohlzylinder, insbesondere mit einem kreisrunden, ovalen oder mehreckigen Aussenquerschnitt, oder einer Kombination daraus, ausgebildet. Die jeweilige obere Stirnfläche und die jeweilige untere Stirnfläche sind hierbei bezüglich der geometrischen Längsachse in im Wesentlichen zueinander entgegengesetzter Richtung abgeschrägt. Die Spreizelemente haben in einem geometrischen Längsschnitt entlang der Längsachse, insbesondere in der oben genannten Längsebene, und entlang einer radialen Richtung im Wesentlichen eine Trapezform, wobei insbesondere der jeweils mindestens eine Schneidzahn auf der breiten Basis des Trapezes angeordnet ist. Unter der breiten Basis des Trapezes ist die größere der beiden nach aussen weisenden, zur Längsachse vorzugsweise parallelen Seiten des Trapezes zu verstehen. In anderen Worten sind die obere und die untere Endkante eines Spreizelements vorzugsweise jeweils um einen gleichen Winkelbetrag, aber in zueinander entgegengesetzter Richtung bezüglich der geometrischen Längsachse, abgeschrägt, so dass gegenüberliegende Endkanten von axial aufeinanderfolgend angeordneten Spreizelementen sich berührende, gegeneinander verschiebbare Gleitflächen darstellen. Dieses hat den Vorteil, dass die Umsetzung von Axialkraft in Radialkraft, und auch umgekehrt bei Dekomprimierung bei Beendigung der Einwirkung einer Axialkraft, gleichmässig für axial aufeinanderfolgend angeordnete Spreizelemente erfolgt.

In einer Weiterbildung der Erfindung ist die geometrische Form der schrägen Stirnflächen jeweils derart, dass die obere Stirnfläche und die untere Stirnfläche jeweils um einen gleichen Winkelbetrag, aber in zueinander entgegengesetzter Richtung, bezüglich der geometrischen Längsachse gerichtet, abgeschrägt sind. Hierunter ist folgendes zu verstehen. Die beiden schrägen Stirnflächen werden jeweils von einer geometrischen Längsebene, auf welcher die Längsachse liegt und die parallel zur jeweiligen radialen Richtung verläuft, in jeweils einer Schnittgerade geschnitten, die nicht-senkrecht zur Längsachse steht. Die beiden Schnittgeraden schneiden jeweils die Längsachse mit dem gleichen, jedoch entgegen gesetzten Schnittwinkel, dessen gleicher Winkelbetrag kleiner als 90°, aber grösser als 0° ist.

Durch optimierte Auswahl der Abschrägung kann die Effizienz der Umwandlung von Axialkraft in Radialkraft und umgekehrt noch weiter erhöht werden. In einer speziellen Ausführungsform liegt der Winkelbetrag des Schnittwinkels zwischen einer Stirnfläche oder beiden Stirnflächen und der die jeweilige Stirnfläche geometrisch durchstossenden Längsachse zwischen 10° und 80°, insbesondere zwischen 45° und 80°, insbesondere zwischen 60° und 75°, insbesondere zwischen 66° und 70°. Unter einem Winkelbetrag von 0° wäre eine zur Längsachse parallel gerichtete Stirnfläche zu verstehen, wohingegen unter einem Winkelbetrag von 90° eine senkrecht zur Längsachse gerichtete Stirnfläche gemeint ist.

Die schrägen Stirnflächen der Spreizelemente haben somit eine derartige, sich in zur Längesachse nicht-senkrechter Richtung erstreckende äussere geometrische Form, dass sich durch das Verringern des axialen Abstands zwischen der oberen Abstützung und der unteren Abstützung jeweils benachbarte Spreizelemente in radiale Richtungen verschieben, die im Wesentlichen entgegengesetzt verlaufen. In anderen Worten verschieben sich zwei benachbarte Spreizelemente entlang der als Gleitflächen wirkenden Stirnflächen, nämlich jeweils einer unteren und einer oberen Stirnfläche, zueinander in entgegengesetzte radiale Richtungen. Durch das axiale Zusammenschieben verschieben sie sich ausserdem zueinander in axiale Richtung. Sich jeweils gegenüberliegende obere und untere Stirnflächen axial aufeinanderfolgend angeordneter Spreizelemente bilden gegeneinander verschiebbare und sich berührende Gleitflächen.

Erfindungsgemäss ist es möglich, dass die obere und/oder untere Abstützung ebenfalls abgeschrägte Stirnflächen aufweisen, die den Stirnflächen der Spreizelemente entsprechen. Alternativ ist es möglich, dass ebenfalls radial bewegliche oder radial unbewegliche Abschlusselemente zwischen dem obersten Spreizelement und der oberen Abstützung sowie zwischen dem untersten Spreizelement und der unteren Abstützung angeordnet sind, wobei diese Abschlusselemente gegebenenfalls auch einen Schneidzahn aufweisen können und wobei sie auf der jeweils inneren Stirnfläche entsprechend den Spreizelementen abgeschrägt sind und auf der jeweils äusseren Stirnfläche eine mit der jeweiligen Abstützung korrespondieren Form aufweisen. Alternativ sind die Abschlusselemente mit den Abstützungen fest verbunden oder einstückig ausgebildet.

Das oben beschriebene radiale Spiel eines jeden Spreizelements in die jeweilige radiale Richtung sowie die sich schräg zu dieser jeweiligen radialen Richtung erstreckenden Stirnflächen bewirken somit, dass mittels des radialen Spiels eine axiale Kraft, die in die axiale Richtung auf das obere Schaftende gerichtet wird, sowie eine entsprechende axiale Bewegung in jeweils in eine radiale Kraft in die radialen Richtungen bzw. eine entsprechende radiale Bewegung umgewandelt wird.

Ein wie beschrieben ausgebildetes erfindungsgemässes Hinterschneidwerkzeug weist eine Vielzahl von Vorteilen gegenüber dem Stand der Technik auf. Die Funktionalitäten von Schneidelement und Spreizelement sind in einer einzigen Komponente vereint, was eine Verringerung von potentiell mit Verschleiss behafteten Komponenten bewirkt. Die Umsetzung von Axialkraft in Radialkraft ist effizienter, denn es verbleibt nicht notwendigerweise die eine Komponente in radialer Richtung stationär, während nur die andere, komplementär angeordnete und wechselwirkende Komponente radial verschoben wird, sondern die jeweils zwei relativ zueinander beweglichen Komponenten werden bevorzugt beide in im Wesentlichen entgegengesetzte Richtungen radial verschoben. Ausserdem erfolgt bei Beendigung der axial wirkenden Kraft, welche sich komprimierend auf den Abstand zwischen oberer und unterer Abstützung und die dazwischen angeordneten Spreizelemente auswirkt, wieder eine Dekomprimierung der Spreizelemente.

Ein wesentlicher Vorteil des erfindungsgemässen Hinterstichbohrers besteht ausserdem darin, dass im Falle des Blockierens der radialen Beweglichkeit eines einzelnen Schneidelements oder mehrerer Schneidelemente die radiale Beweglichkeit der restlichen Schneidelemente nicht herhindert wird. Weist die Bohrung beispielsweise in einem Bereich eine übermässig harte Wand auf, insbesondere aufgrund in die Wand hineinragender Armierungseisen oder aufgrund einer Unregelmässigkeit im Material der Wand, und ist es einem Schneidelement nicht möglich, in diesen harten Wandabschnitt zu schneiden, so wirkt sich dieses Blockieren der radialen Expandierbarkeit des betroffenen Schneidelements nicht auf die restlichen Schneidelemente aus. Diese restlichen Schneidelemente können ihre Schneidfunktion uneingeschränkt ausüben, da das radial blockierte Schneidelement die axiale Kraft auf die restlichen Schneidelemente überträgt.

Besondere geometrische Ausführungsformen der Spreizelemente und Querschnittsgeometrien des von ihnen umgebenen unteren Schaftabschnitts können diese vorteilhaften Effekte noch verstärken.

Auch die relativen Querschnittsgeometrien (senkrecht zur axialen Richtung) des Aussendurchmessers des Aufnahmebereichs und des Innendurchmessers der - diesen umgebenden - hülsenförmigen Spreizelemente können wesentlich für eine effiziente Umsetzung zwischen Axial- und Radialkraft und gute radiale Verschiebbarkeit der Spreizelemente beitragen.

Der von den hülsenförmigen Spreizelementen umgebene Aufnahmebereich hat in einer Weiterbildung einen Aussenquerschnitt mit einem ersten Aussendurchmesser senkrecht zur Längsachse und einem zweiten Aussendurchmesser senkrecht zur Längsachse und senkrecht zum ersten Aussendurchmesser. Unter einem Aussendurchmesser ist allgemein die Aussenabmessung in Richtung einer zur Längsachse senkrechten Achse zu verstehen. Es kann sich hierbei um die Aussenabmessung eines quadratischen, rechteckigen, polygonalen, kreisrunden oder elliptischen Körpers handeln. Dementsprechend hat der Aufnahmebereich insbesondere einen quadratischen, rechteckigen, polygonalen, kreisrunden oder elliptischen Querschnitt, wobei die Längsachse insbesondere eine geometrische Normale der Querschnittsebene ist. Die Spreizelemente haben jeweils einen Innenquerschnitt, der unter Ermöglichung des oben genannten Spiels mit dem Aussenquerschnitt des Aufnahmebereichs korrespondiert. Der Innenquerschnitt hat einen ersten Innendurchmesser, der senkrecht zur Längsachse verläuft, und einem zweiten Innendurchmesser, der sich sowohl senkrecht zur Längsachse als auch senkrecht zum ersten Innendurchmesser erstreckt. Unter einem Innendurchmesser ist allgemein die Innenabmessung in Richtung einer zur Längsachse senkrechten Achse zu verstehen. Der Innenquerschnitt der Spreizelemente ist insbesondere quadratisch, rechteckig, polygonal, kreisrund oder elliptisch, wobei die Längsachse insbesondere eine geometrische Normale der Querschnittsebene des Innenquerschnitts ist. Vorzugsweise ist der erste Innendurchmesser des jeweiligen Spreizelements derart - insbesondere geringfügig - grösser als der erste Aussendurchmesser des Aufnahmebereichs, dass zumindest eine teilweise axiale Verschiebbarkeit der Spreizelemente entlang der Längsachse im Aufnahmebereich möglich ist. Hingegen ist der zweite Innendurchmesser des jeweiligen Spreizelements derart wesentlich grösser als der zweite Aussendurchmesser des Aufnahmebereichs, dass das genannte radiale Spiel in der jeweiligen radialen Richtung senkrecht zur Längsachse gebildet wird, so dass die radiale Verschiebbarkeit der Spreizelemente ermöglicht wird.

In anderen Worten weist der von den hülsenförmigen Spreizelementen umgebene Aufnahmebereich eines erfindungsgemässen Hinterschneidwerkzeugs in einer Weiterbildung der Erfindung senkrecht zur geometrischen Längsachse einen Aussenquerschnitt mit mindestens einem - der Aussenquerschnittshauptachse oder der Aussenquerschnittsdiagonalen entsprechenden - Aussendurchmesser auf. Die Spreizelemente weisen jeweils senkrecht zu der geometrischen Längsachse einen Innenquerschnitt mit zwei - Innenquerschnittshauptachsen oder Innenquerschnittsdiagonalen entsprechenden - Innendurchmessern, vorzugsweise unterschiedlicher Länge, entlang der Innenquerschnittshauptachsen oder Innenquerschnittsdiagonalen auf. Dabei ist mindestens einer der Innendurchmesser der Spreizelemente grösser als der mindestens eine Aussendurchmesser des Aufnahmeabschnitts. Dies ermöglicht eine radiale Verschiebbarkeit der Spreizelemente. Vorzugsweise ist dabei der Innenquerschnitt der Spreizelemente elliptisch oder rechteckig. Der von den Spreizelementen umgebene Aufnahmeabschnitt weist in einer vorteilhaften Weiterbildung senkrecht zur geometrischen Längsachse einen elliptischen, vorzugsweise kreisförmigen, oder einen rechteckigen, vorzugsweise quadratischen, Aussenquerschnitt auf.

Die untere Abstützung ist in einer speziellen Ausführungsform mit dem unteren Schaftende, insbesondere mittels einer in das untere Schaftende eingeschraubten Schraube, axialfest verbunden. Die untere Abstützung ist beispielsweise in die axiale Richtung abschiebbar am unteren Schaftende angeordnet. Die Spreizelemente sind auf den Aufnahmebereich aufgeschoben, von diesem entfernbar und gegen ein Abfallen von dem Aufnahmebereich in die axiale Richtung durch die lösbare untere Abstützung gesichert. Vorzugsweise ist das erfindungsgemässe Hinterschneidwerkzeug also so gestaltet, dass die Spreizelemente wie auf eine Kettenschnur auf dem Aufnahmebereich aufschiebbar oder von diesem entfernbar und gegen ein Abfallen von dem Aufnehmebereich durch einen Befestigungsmechanismus gesichert sind. Eine solche Anordnung ermöglicht eine leichte Wartung und Reinigung des Werkzeugs, beispielsweise zum Austausch von Spreizelementen, deren Scheidzähne verschlissenen sind.

In einer bevorzugten Ausführungsform umfasst das Hinterschneidwerkzeug einen ersten Bewegungsabschnitt und einen zweiten Bewegungsabschnitt. Dem ersten Bewegungsabschnitt sind das obere Schaftende und die obere Abstützung zugeordnet, wohingegen dem zweiten Bewegungsabschnitt die untere Abstützung zugeordnet ist. Der erste Bewegungsabschnitt und der zweite Bewegungsabschnitt sind zum Verändern des axialen Abstands zwischen der oberen Abstützung und der unteren Abstützung axial zueinander verschiebbar. Der zweite Bewegungsabschnitt, dem die untere Abstützung zugeordnet ist, ist mit dem Bohrloch axial in der axialen Richtung koppelbar, indem er beispielsweise in einer ersten Variante auf dem Boden des Bohrlochs oder in einer zweiten Variante auf einer das Bohrloch umgebenden Oberfläche abstützbar ist.

Bei dieser genannten ersten Variante ist in einer möglichen Weiterbildung der Erfindung die obere Abstützung axial mit dem Schaft gekoppelt und der Schaft ist dem ersten Bewegungsabschnitt zugeordnet. Die untere Abstützung ist mit einer unteren Abstützhülse axial gekoppelt oder wird von der unteren Abstützhülse gebildet. Diese unteren Abstützhülse ist am unteren Schaftende angeordnet, dem zweiten Bewegungsabschnitt zugeordnet und auf dem Boden des Bohrlochs abstützbar. Das untere Schaftende ist in axialer Richtung in die Abstützhülse derart hineinschiebbar, dass der axiale Abstand zwischen der oberen Abstützung und der unteren Abstützung durch Ausüben der axialen Kraft auf das obere Schaftende und Hineinschieben des unteren Schaftendes in die den Schaft radial umgebende untere Abstützung und in die Abstützhülse verringerbar ist. Ein Vorteil dieser ersten Variante besteht im relativ einfachen Aufbau des Hinterschneidwerkzeugs, das sich aus nur wenigen Komponenten zusammensetzt und sehr leicht wartbar ist. Da sich die untere Abstützhülse auf dem Boden des Bohrlochs abstützt, muss es sich bei dem Bohrloch jedoch um ein Sachloch mit einem Boden bzw. einer die Länge des Hinterschneidwerkzeugs nicht wesentlich überschreitenden Tiefe handeln. Ausserdem wird der unter Abschnitt des Bohrlochs, in welchem sich die untere Abstützhülse befindet, nicht mittels der Spreizelemente und deren Schneidzahn aufgeraut. Diese bei manchen Anwendungen möglicherweise unvorteilhaften Einschränkungen werden durch die zweite Variante behoben.

Bei der genannten zweiten Variante setzt sich der Schaft in einer möglichen Weiterbildung der Erfindung aus einem oberen Schaftabschnitt und einem unteren Schaftabschnitt zusammen. Der obere Schaftabschnitt und der untere Schaftabschnitt sind insbesondere teleskopartig entlang der Längsachse ineinanderschiebbar. Der obere Schaftabschnitt, der das obere Schaftende und die obere Abstützung beinhaltet, bildet hierbei den ersten Bewegungsabschnitt, wohingegen der untere Schaftabschnitt, der das unteren Schaftende und die untere Abstützung beinhaltet, den zweiten Bewegungsabschnitt bildet. Vorzugsweise ist der untere Schaftabschnitt axial mit einer dem zweiten Bewegungsabschnitt zugeordneten Abstützschulter gekoppelt. Diese Abstützschulter umgibt den unteren Schaftabschnitt in einem Bereich oberhalb der oberen Abstützung radial derart, dass der zweite Bewegungsabschnitt mittels der Abstützschulter an einer das Bohrloch umgebenden Oberfläche zur Vermeidung einer axialen Verschiebung des zweiten Bewegungsabschnitts in die axiale Richtung abstützbar ist. Die Abstützschulter kann radial am Schaft gelagert sein, insbesondere mittels eines Wälz- oder Gleitlagers, so dass die Abstützschulter stillstehend auf der das Bohrloch umgebenden Oberfläche aufliegt. Dies hat den Vorteil, dass es zu keiner Relativbewegung zwischen der aufliegenden Abstützschulter und der Oberfläche kommt. Alternativ ist die Abstützschulter mit dem Schaft rotatorisch gekoppelt, so dass die Abstützschulter rotiert. Abhängig von der Reibzahl der Oberfläche ist dies mehr oder weniger nachteilig.

In anderen Worten wird bei dieser zweiten Variante die Hineinschiebbarkeit des Hinterscheidwerkzeugs in das Bohrloch durch die Abstützschulter axial begrenzt, wobei die Abstützschulter bei vollständig in das Bohrloch hinein geschobenem Schaft auf der Oberfläche, welche das Bohrloch radial umgibt, aufliegt und somit ein weiteres Hineinschieben des zweiten Bewegungsabschnitts in das Bohrloch verhindert. Somit ist der zweite Bewegungsabschnitt axial in axialer Richtung fixiert, während der erste Bewegungsabschnitt in axialer Richtung zum Verringern des Abstands der oberen und der unter Abstützung und somit zum Komprimieren der Spreizelemente weiter in das Bohrloch hineinschiebbar ist.

Das untere Schaftende, die untere Abstützung, der dem zweiten Bewegungsabschnitt zugeordnete Aufnahmebereich mit den ihn umgebenden Spreizelementen und insbesondere die obere Abstützung sind bei dieser zweiten Variante in das Bohrloch einführbar. Der obere Schaftabschnitt weist einen sich entlang der Längsachse erstreckenden Zapfen auf, der axial verschiebbar durch die Abstützschulter zur axialen Kopplung des oberen Schaftendes mit der oberen Abstützung hindurchgeführt ist und der dem ersten Bewegungsabschnitt zugeordnet ist. Die Spreizelemente sind drehungsübertragend mit dem oberen Schaftende gekoppelt, so dass eine Rotation des oberen Schaftendes auf die Spreizelemente übertragen wird. Bevorzugt ist der untere Schaftabschnitt zumindest im Bereich der Abstützschulter entlang der geometrischen Längsachse hohl ausgebildet, wobei der Zapfen im Inneren des unteren Schaftabschnitts axial verschiebbar geführt ist. Dieser Zapfen ist über einen Schlitz im unteren Schaftabschnitt und insbesondere mittels eines den Zapfen mit der oberen Abstützung verbindenden Querbolzens mit der oberen Abstützung gekoppelt.

Diese zweite Variante hat den Vorteil, dass das Hinterschneidwerkzeug bei jedem Bohrloch, dessen Tiefe mindestens der maximalen Längserstreckung zwischen der Abstützschulter und dem unteren Ende des Hinterschneidwerkzeugs entspricht, einsetzbar ist, also auch bei sehr tiefen Bohrungen oder Durchgangsbohrungen. Die Schneidzähne der Spreizelemente können sich bis zum Ende des Werkzeugs erstrecken, so dass auch der untere Bereich eines Bohrlochs aufrauhbar ist.

Das erfindungsgemässe Hinterschneidwerkzeug wird nachfolgend anhand von in den Zeichnungen schematisch dargestellten konkreten Ausführungsbeispielen rein beispielhaft näher beschrieben. Im Einzelnen zeigen:
Fig. 1 den prinzipiellen Aufbau eines erfindungsgemässen Hinterschneidwerkzeugs zur Erzeugung von Querrillen in einem bestehenden Loch in einer schematischen Längsschnittsdarstellung in einer ersten Variante;
Fig. 2a eine schematische Anordnung von Spreizelementen in einer nicht-komprimierten Ausgangsstellung;
Fig. 2b eine schematische Anordnung von Spreizelementen in einer komprimierten Stellung;
Fig. 2c ein Spreizelement in einer schematischen Längsschnittsdarstellung;
Fig. 3a eine Innenkontur eines Spreizelements und eine Aussenkontur eines Aufnahmebereichs mit jeweils einem rechteckigen Querschnitt sowie einem radialen Spiel in einer radialen Richtung;
Fig. 3b eine Innenkontur eines Spreizelements mit einem quadratischen Querschnitt und eine Aussenkontur eines Aufnahmebereichs mit einem rechteckigen Querschnitt sowie einem radialen Spiel in einer radialen Richtung;
Fig. 3c eine Innenkontur eines Spreizelements und eine Aussenkontur eines Aufnahmebereichs mit jeweils einem ovalen Querschnitt sowie einem radialen Spiel in einer radialen Richtung;
Fig. 3d eine Innenkontur eines Spreizelements mit einem ovalen Querschnitt und eine Aussenkontur eines Aufnahmebereichs mit einem kreisrunden Querschnitt sowie einem radialen Spiel in einer radialen Richtung;
Fig. 4 eine erste Ausführungsform eines erfindungsgemässen Hinterschneidwerkzeugs in einer Querschnittsdarstellung in der ersten Variante;
Fig. 5a eine zweite Ausführungsform eines erfindungsgemässen Hinterschneidwerkzeugs in einer Querschnittsdarstellung in einer zweiten Variante; und
Fig. 5b eine dritte Ausführungsform eines erfindungsgemässen Hinterschneidwerkzeugs in einer Querschnittsdarstellung in der zweiten Variante.

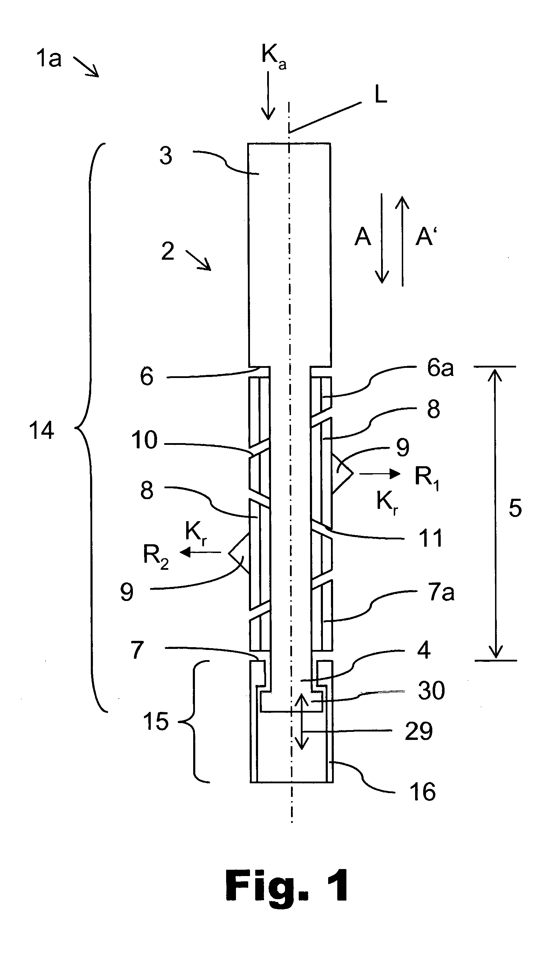

Die Fig. 1 veranschaulicht in einer schematischen Längsschnittsdarstellung den prinzipiellen Aufbau einer ersten erfindungsgemässen Variante des Hinterschneidwerkzeugs 1a zur Erzeugung von Querrillen in einem bestehenden Loch. Das Hinterschneidwerkzeug 1a weist eine geometrische Längsachse L mit einer axialen Richtung A und einer entgegengesetzten axialen Richtung A' auf und umfasst einen Schaft 2. Dieser Schaft 2 hat ein oberes Schaftende 3, das drehfest mit einer rotatorischen Antriebsmaschine, insbesondere einer Bohrmaschine, zum Versetzen des Schafts 2 in Rotation um die Längsachse L verbindbar ist. Die rotatorische Antriebsmaschine ist in Figur 1 nicht dargestellt. Das obere Schaftende 3 weist in die entgegengesetzte axiale Richtung A'. Ausserdem umfasst der Schaft 2 ein unteres Schaftende 4, das dem oberen Schaftende 3 axial gegenüberliegt und in die axiale Richtung A weist.

Zwischen dem oberen Schaftende 3 und dem unteren Schaftende 4 befindet sich ein Aufnahmebereich 5 des Schafts 2. Dieser sich längs entlang der Längsachse L erstreckende Aufnahmebereich 5 wird von einer oberen Abstützung 6 und einer unteren Abstützung 7 axial begrenzt. Der Aufnahmebereich 5 des Schafts 2 hat einen geringeren Durchmesser auf als das obere Schaftende 3. Die obere Abstützung 6 wird von dem Absatz gebildet, in welchem der kleine Durchmesser des Aufnahmebereichs 5 in den grösseren Durchmesser des oberen Schaftabschnitts 3 übergeht. Somit begrenzt die obere Abstützung 6 den Aufnahmebereich 5 in der entgegengesetzten axialen Richtung A', wie in Figur 1 gezeigt.

Die am unteren Schaftende 4 angeordnete untere Abstützung 7 ist axial zur oberen Abstützung 6 beabstandet und begrenzt den Aufnahmebereich 5 in der axialen Richtung A.

Das Hinterschneidwerkzeug 1a umfasst des Weiteren mindestens zwei als hülsenförmige Hohlkörper ausgebildete Spreizelemente 8, die rings um den Schaft 2 im Aufnahmebereich 5 in axialer Richtung verteilt angeordnet sind und jeweils den Aufnahmebereich 5 rings umschliessen. Die Spreizelemente 8 haben zum Aufnahmebereich 5 jeweils ein radiales Spiel in jeweiliger radialer Richtung R1 bzw. R2 senkrecht zur geometrischen Längsachse L. Die Spreizelemente 8 tragen im Wesentlichen radial nach aussen in die jeweilige radiale Richtung R1 bzw. R2 weisende Schneidzähne 9. Diese bestehen aus hartem Material, insbesondere aus Hartmetall, Schellarbeitsstahl, Keramik, Saphir oder Diamant, oder sie sind einstückig mit dem jeweiligen Spreizelement 8 ausgebildet.

Das Hinterschneidwerkzeug 1a gliedert sich in einen ersten Bewegungsabschnitt 14 und einen zweiten Bewegungsabschnitt 15.

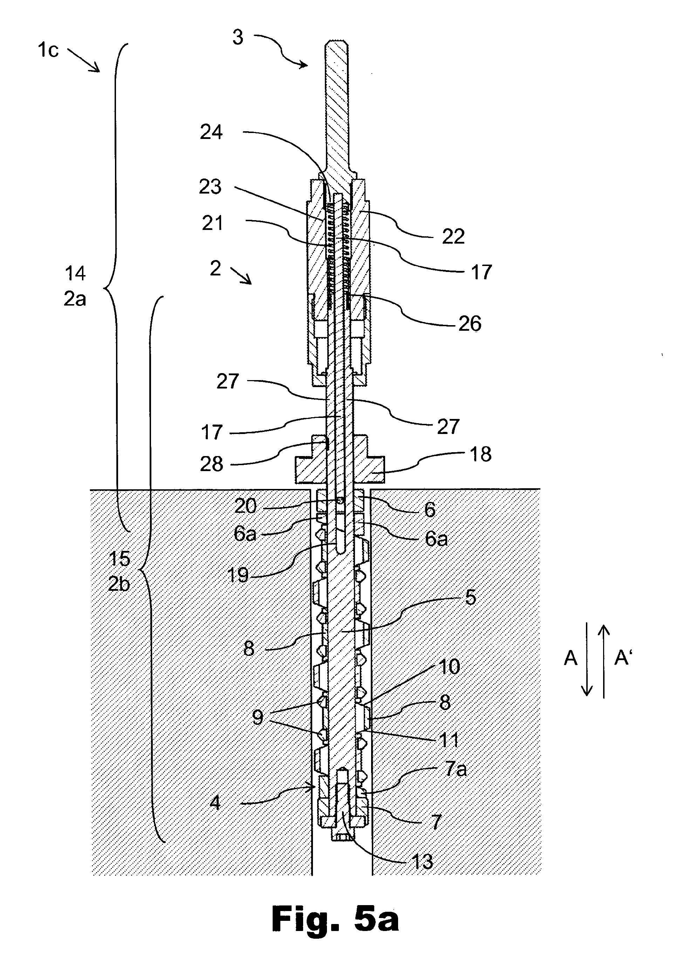

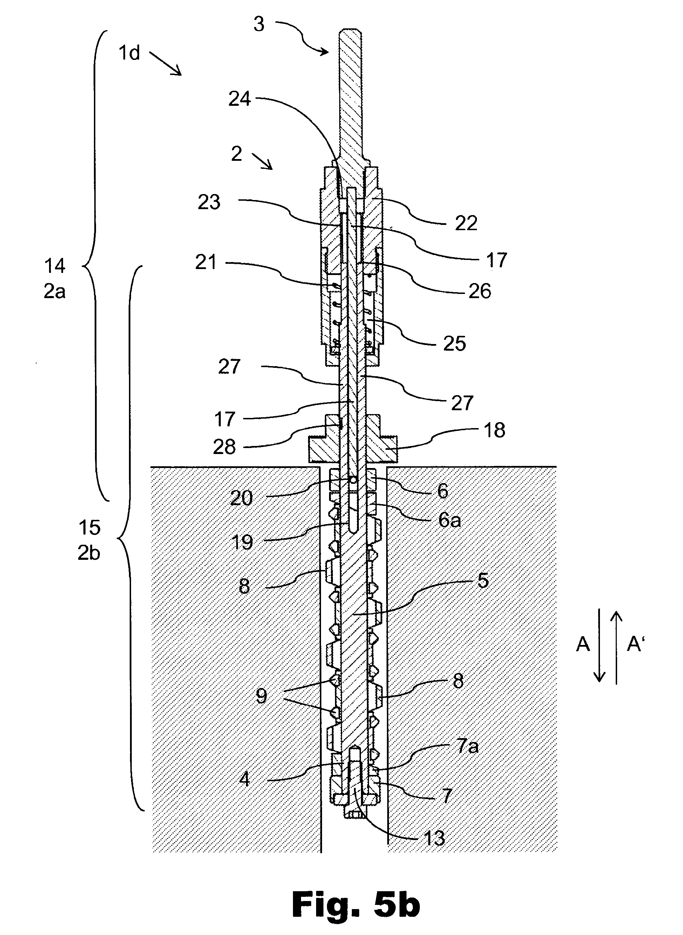

Gemäss der in Figur 1 gezeigten ersten Variante wird der erste Bewegungsabschnitt 14 von dem Schaft 2, dessen oberen Schaftende 3 und dessen oberen Abstützung 6 sowie dem Aufnahmebereich 5 gebildet. Der zweite Bewegungsabschnitt 15 umfasst hingegen die untere Abstützung 7 sowie eine untere Abstützhülse 16. Diese dem zweiten Bewegungsabschnitt 15 zugeordnete untere Abstützung 7 ist am unteren Schaftende 4 angeordnet und auf dem Boden des Bohrlochs abstützbar. Somit ist der zweite Bewegungsabschnitt 15 mit dem Bohrloch axial in der axialen Richtung A koppelbar. In anderen Worten ist der zweite Bewegungsabschnitt 15 bei einem vollständig in das Bohrloch hinein geschobenen Hinterschneidwerkzeug 1a axial mit dem Bohrloch in der axialen Richtung A gekoppelt, da die Abstützhülse 16 auf dem Boden des Bohrlochs aufsteht. Das untere Schaftende 4 ist in axialer Richtung A in die Abstützhülse 16 derart teleskopartig hineinschiebbar, dass der axiale Abstand zwischen der oberen Abstützung 6 und der unteren Abstützung 7 durch Ausüben der axialen Kraft Kₐ auf das obere Schaftende 3 und einem hieraus resultierenden Hineinschieben des unteren Schaftendes 4 in die Abstützhülse 16 und somit auch in die untere Abstützung 7, die den Schaft 2 radial umgibt, verringerbar ist. Die Abstützhülse 16 hat an ihrer oberen Stirnfläche einen größeren Durchmesser als der Aufnahmebereich 5. Diese der oberen Abstützung 6 gegenüberliegende Stirnfläche der unteren Abstützhülse 16 bildet die untere Abstützung 7. Diese untere Abstützung 7 wird also von dem Absatz zwischen dem kleineren Durchmesser des Aufnahmebereichs 5 und dem grösseren Durchmesser der Abstützhülse 16 gebildet. Durch das Hineinschieben des unteren Schaftendes 4 in die unteren Abstützhülse 16 sind der erste Bewegungsabschnitt 14 und der zweite Bewegungsabschnitt 15 axial zueinander verschiebbar, wie anhand des Pfeils 29 in Figur 1 gezeigt, so dass der axiale Abstand zwischen der oberen Abstützung 6 und der unteren Abstützung 7 veränderbar ist. Um ein Herabfallen der Abstützhülse 16 in der axialen Richtung A zu verhindern, ist am unteren Schaftende 4 ein Absatz 30 mit einem gegenüber dem Durchmesser des Aufnahmebereichs 5 erhöhten Durchmesser ausgeformt, welcher die axiale Beweglichkeit der Abstützhülse 16 in der axialen Richtung A begrenzt. Alternativ ist auch eine zweite Variante der Bewegungsabschnitte 14 und 15 erfindungsgemäss möglich, welche in den Figuren 5a und 5b im Folgenden erläutert wird. Erfindungsgemäss sind die Spreizelemente 8 axial verschiebbar zwischen der oberen Abstützung 6 und der unteren Abstützung 7 verdrehgesichert im Aufnahmebereich 5 angeordnet. Die axiale Verschiebbarkeit dieser Spreizelemente 8 ist jedoch durch die obere Abstützung 6 in die entgegengesetzte axiale Richtung A' und durch die untere Abstützung 7 in die axiale Richtung A begrenzt, indem die Abstützungen 6 und 7 einen Durchmesserabsatz bilden. Die beiden Spreizelemente 8 weisen jeweils eine in die entgegengesetzte axiale Richtung A', also nach oben weisende schräge obere Stirnfläche 10 und eine in die axiale Richtung A, also nach unten weisende schräge untere Stirnfläche 11 auf. Die schrägen Stirnflächen 10 und 11 besitzen jeweils eine derartige, sich in zur Längesachse L nicht-senkrechter Richtung erstreckende äussere geometrische Form, dass sich durch das Verringern des axialen Abstands zwischen der oberen Abstützung 6 und der unteren Abstützung 7 jeweils benachbarte Spreizelemente 8 in im Wesentlichen entgegengesetzte radiale Richtungen R₁ und R₂ mittels des radialen Spiels verschieben, wobei die axiale Kraft Kₐ jeweils in eine radiale Kraft Kᵣ in die radialen Richtungen R₁ bzw. R₂ umgewandelt wird. Zwischen der oberen Abstützung 6 und der oberen Stirnfläche 10 des obersten Spreizelements 8 ist ein oberes Abstützelement 6a vorgesehen, das eine der schrägen oberen Stirnfläche 10 des Spreizelements 8 entsprechende schräge untere Stirnfläche sowie eine der geraden Stirnfläche der oberen Abstützung 6 entsprechende gerade obere Stirnfläche hat. Ausserdem ist zwischen der unteren Abstützung 6 und der unteren Stirnfläche 11 des untersten Spreizelements 8 ist ein unteres Abstützelement 7a vorgesehen, das eine der schrägen unteren Stirnfläche 11 des Spreizelements 8 entsprechende schräge obere Stirnfläche sowie eine der geraden Stirnfläche der unteren Abstützung 7 entsprechende gerade untere Stirnfläche aufweist. Diese Abstützelemente 6a und 7a weisen in Figur 1 wie auch die Spreizelemente 8 ebenfalls ein radiales Spiel zum Aufnahmebereich 5 des Schafts 3 auf, jedoch ist es alternativ auch generell möglich, dass diese ohne wirksamen radialen Spiel auf dem Aufnahmebereich 5 des Schafts axial verschiebbar sitzen.

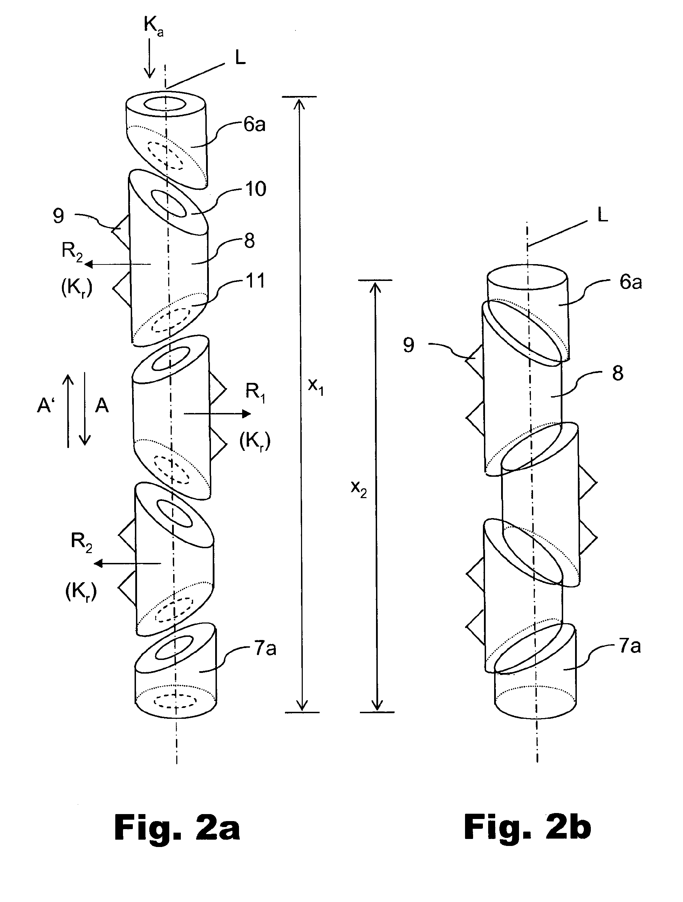

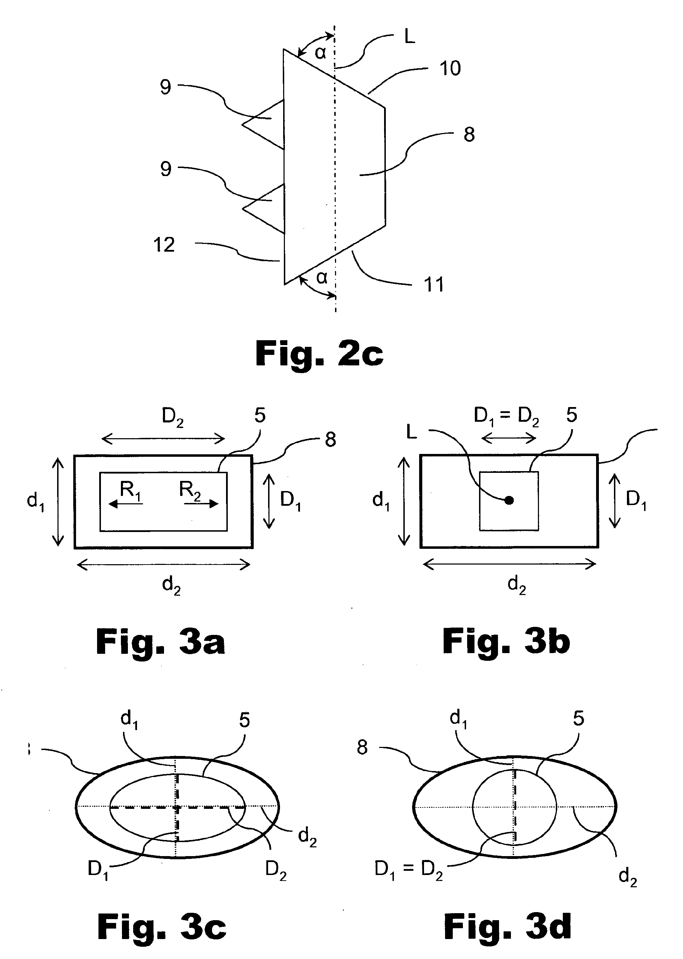

Die prinzipielle Funktionsweise des erfindungsgemässen Hinterschneidwerkzeugs 1a ist in den Figuren 2a bis 2c in einer perspektivischen Ansicht illustriert, wobei Figur 2a eine schematische Anordnung von Spreizelementen in einer nicht-komprimierten Ausgangsstellung und Figur 2b eine schematische Anordnung von Spreizelementen in einer komprimierten Stellung zeigt, wobei in Figur 2c ein Spreizelement in einer schematischen Längsschnittsdarstellung dargestellt ist. Diese Figuren werden im Folgenden gemeinsam beschrieben.

In den Figuren 2a bis 2c ist die relative Anordnung der Spreizelemente 8 bezüglich der geometrischen Längsachse L, ohne den Schaft 2 und den von den Spreizelementen umgebenen Aufnahmebereich 5 aus Figur 1 dargestellt. In dem Beispiel gemäss Figuren 2a bis 2c sind die Spreizelemente 8 als zweiseitig schräg abgeschnittene Zylinder ausgebildet mit, bezüglich der geometrischen Längsachse L, jeweils in im Wesentlichen zueinander entgegengesetzter Richtung abgeschrägten oberen und unteren Stirnflächen 10 und 11. In dieser Ausführungsform weisen die Spreizelemente 8, in einem Längsschnitt entlang der geometrischen Längsachse L, einen im Wesentlichen trapezförmigen Längsschnitt auf, wie insbesondere in Figur 2c erkennbar. Unter Einwirkung einer axial wirkenden Kraft Kₐ in axiale Richtung A verringert sich der Abstand zwischen der oberen Abstützung 6 und der unteren Abstützung 7, Figur 1, sowie zwischen dem oberen Abstützelement 6a und dem unteren Abstützelement 7a von einem Wert X₁ (Figur 2a) auf einen Wert X₂ (Figur 2b). Diese Kraft Kₐ wirkt komprimierend auf die zwischen den Abstützungen 6 und 7 angeordneten Spreizelemente 8. Aufgrund der Formgebung der Spreizelemente 8 wird die Axialkraft Kₐ jeweils in eine Radialkraft Kᵣ umgewandelt, mit welcher axial aufeinanderfolgend angeordnete Spreizelemente 8 mit den daran angebrachten jeweils zwei Schneidzähnen 9 in im Wesentlichen radial entgegengesetze Richtungen R₁ und R₂ gedrängt und verschoben werden, wie in den Figuren 2a und 2b veranschaulicht. In anderen Worten verschieben sich jeweils zwei angrenzende Spreizelemente 8 durch Verringern des Abstands von X₁ auf X₂ in die entgegen gesetzten radialen Richtungen R₁ und R₂, wobei sich die benachbarten Spreizelemente 8 gegeneinander verspreizen, also sich in entgegengesetzte radiale Richtungen R₁ und R₂ verdrängen, wie in der Figur 2b gezeigt.

Vorzugsweise sind die obere Stirnfläche 10 und die untere Stirnfläche 11 eines Spreizelements 8 jeweils um einen gleichen Winkelbetrag, aber in zueinander entgegengesetzter Richtung bezüglich der geometrischen Längsachse L, abgeschrägt, so dass sich gegenüberliegende Stirnflächen von axial aufeinanderfolgend angeordneten Spreizelementen 8 sich berührende, insbesondere parallele, gegeneinander verschiebbare Gleitflächen darstellen. Dies hat den Vorteil, dass die Umsetzung von Axialkraft Kₐ in Radialkraft Kᵣ (und auch umgekehrt bei Dekomprimierung bei Beendigung der Einwirkung einer Axialkraft) gleichmässig für axial aufeinanderfolgend angeordnete Spreizelemente 8 erfolgt. In Figur 2c sind die Spreizelemente 8 als beidseitig schräg abgeschnittene Zylinder mit einem kreisrunden Aussenquerschnitt ausgebildet. Die jeweilige obere Stirnfläche 10 und die jeweilige untere Stirnfläche 11 sind bezüglich der geometrischen Längsachse L in im Wesentlichen zueinander entgegengesetzter Richtung abgeschrägt, wobei die Spreizelemente 8 in einem geometrischen Längsschnitt entlang der Längsachse L und entlang einer radialen Richtung R₁ bzw. R₂ im Wesentlichen eine Trapezform aufweisen. Die jeweiligen Schneidzähne 9 sind auf der breiten Basis 12 des Trapezes angeordnet, wie in Figur 2c gezeigt. Die in zur Längesachse L nicht-senkrechter Richtung erstreckende äussere geometrische Form der schrägen Stirnflächen 10 und 11 ist jeweils derart, dass die obere Stirnfläche 10 und die untere Stirnfläche 11 jeweils um einen gleichen Winkelbetrag α, aber in zueinander entgegengesetzter Richtung, bezüglich der geometrischen Längsachse L gerichtet, abgeschrägt sind, siehe Figur 2c. Dieser Winkelbetrag α zwischen der die Stirnflächen 10 und 11 durchstossenden Längsachse L und der jeweiligen Stirnfläche 10 bzw. 11 beträgt im gezeigten Ausführungsbeispiel etwa 68°, er kann jedoch vorzugsweise auch allgemein zwischen 10° und 80°, insbesondere zwischen 45° und 80°, insbesondere zwischen 60° und 75°, insbesondere zwischen 66° und 70°, betragen.

In Figuren 3a bis 3d sind unterschiedliche Querschnittsgeometrien des Aussenquerschnitts des Aufnahmebereichs 5 des Schafts 2 und des Innenquerschnitts der Spreizelemente 8 gezeigt. Der von den hülsenförmigen Spreizelementen 8 umgebene Aufnahmebereich 5 hat gemäss der Figur 3a einen rechteckigen, gemäss Figur 3b einen quadratischen, gemäss Figur 3c einen elliptischen und gemäss Figur 3d einen kreisrunden Aussenquerschnitt, jeweils mit einem ersten Aussendurchmesser D₁ senkrecht zur Längsachse L und einem zweiten Aussendurchmesser D₂ senkrecht zur Längsachse L und senkrecht zum ersten Aussendurchmesser D₁. Die Spreizelemente 8 haben jeweils einen rechteckigen Innenquerschnitt (Figuren 3a und 3b) bzw. einen elliptischen Innenquerschnitt (Figuren 3c und 3d), wobei die Innenquerschnitte einen ersten Innendurchmesser d₁ senkrecht zur Längsachse L und parallel zum ersten Aussendurchmesser D₁ und einem zweiten Innendurchmesser d₂ senkrecht zur Längsachse L, senkrecht zum ersten Innendurchmesser d₁ und parallel zum zweiten Aussendurchmesser D₂ aufweisen. Der erste Innendurchmesser d₁ ist im allgemeinen derart grösser als der erste Aussendurchmesser D₁, dass die axiale Verschiebbarkeit der Spreizelemente 8 im Aufnahmebereich 5 gewährleistet ist, wohingegen der zweite Innendurchmesser d₂ derart wesentlich grösser ist als der zweite Aussendurchmesser D₂ ist, dass das radiale Spiel in der jeweiligen radialen Richtung R₁ und R₂ senkrecht zur Längsachse L gebildet wird, wodurch die radiale Verschiebbarkeit der Spreizelemente 8 ermöglicht wird. Alternativ sind auch andere oder auch die Kombination unterschiedlicher Aussen- und Innenquerschnittsgeometrien möglich. So ist es insbesondere auch möglich, dass der Aufnahmebereich 5 einen Aussenquerschnitt mit einer kreisrunden Ursprungsform mit dem zweiten Aussendurchmesser D₂ und einer beidseitigen Abflachung aufweist, wobei sich durch diese beidseitige Abflachung ein kleinerer erster Aussendurchmesser D₁ ergibt. Gleiches gilt auch bezüglich des Innenquerschnitts der Spreizelemente 8.

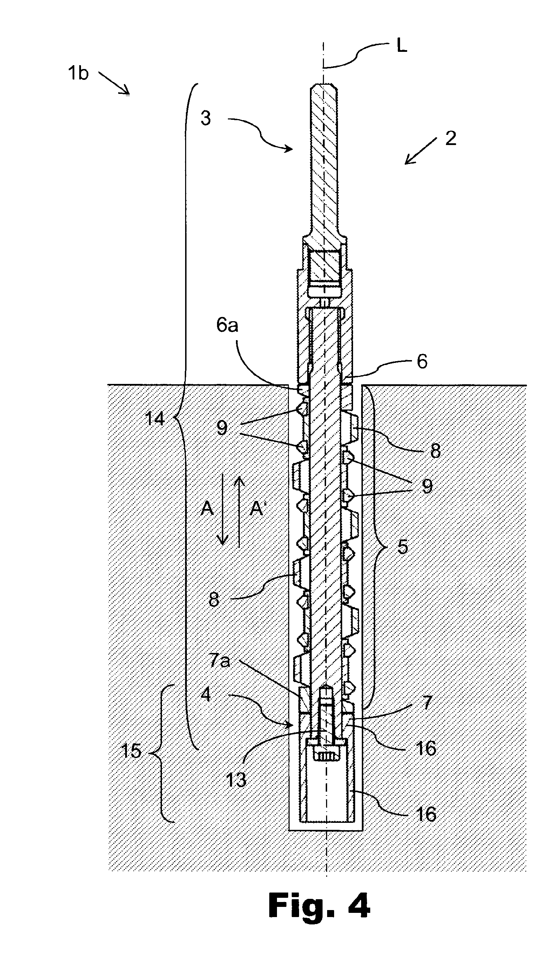

Figur 4 zeigt eine erste Ausführungsform eines erfindungsgemässen Hinterschneidwerkzeugs der in Figur 1 bereits schematisch erläuterten ersten Variante der Erfindung. Da der allgemeine Aufbau dieser Ausführungsform gemäss Figur 4 bereits in Zusammenhang mit der Figur 1 erklärt worden ist, wird auf die Beschreibung bereits eingangs ausgeführter Merkmale und Bezugszeichen im Folgenden zum Teil verzichtet.

Das in Figur 4 gezeigte Hinterschneidwerkzeug 1b gliedert sich in den ersten Bewegungsabschnitt 14, der den Schaft 2 mit dem oberen Schaftende 3 und dem unteren Schaftende 4 und die axial mit dem Schaft 2 gekoppelte obere Abstützung 6 umfasst, sowie in den zweiten Bewegungsabschnitt 15, der die untere Abstützung 7 umfasst. Die untere Abstützung 7 ist mit einer unteren Abstützhülse 16 axial gekoppelt. Diese unteren Abstützhülse 16, die am unteren Schaftende 4 angeordnet ist, ist dem zweiten Bewegungsabschnitt 15 zugeordnet und ist auf dem Boden des Bohrlochs abstützbar. Somit ist der zweite Bewegungsabschnitt 15 mit dem Bohrloch axial in der axialen Richtung A koppelbar. Die untere Abstützung 7 und die untere Abstützhülse 16 sind einstückig ausgebildet, wobei die nach oben weisende Stirnfläche der Abstützhülse 16 die Abstützung 7 bildet. Das untere Schaftende 4 ist in axialer Richtung A in die Abstützhülse 16 derart hineinschiebbar, dass der axiale Abstand zwischen der oberen Abstützung 6 und der unteren Abstützung 7 durch Ausüben der axialen Kraft Kₐ auf das obere Schaftende 3 und Hineinschieben des unteren Schaftendes 4 in die untere Abstützhülse 16 verringerbar ist. Somit sind der erste Bewegungsabschnitt 14 und der zweite Bewegungsabschnitt 15 zum Verändern des axialen Abstands zwischen der oberen Abstützung 6 und der unteren Abstützung 7 axial zueinander verschiebbar. Der Aufnahmebereich 5 des Schafts 2 und das obere Schaftende 3 sind drehfest verbunden und zusammen mit der oberen Abstützung 6 gegenüber der unteren Abstützung 7 axial verschiebbar. Gemäss dieser Ausführungsform können der Aufnahmebereich 5 des Schafts 2 und das obere Schaftende 3 miteinander mehrstückig oder auch einstückig ausgebildet sein. Auch die obere Abstützung 6 kann mit dem Schaft 2 zusammen einstückig ausgebildet sein.

Die Spreizelemente 8, mit den damit verbundenen Schneidzähnen 9, sind wie auf eine Kettenschnur auf dem Aufnahmebereich 5 des Schafts 2 aufgeschoben und von diesem entfernbar. Die Spreizelemente 8 sind gegen ein Abfallen von dem Aufnahmebereich 5 des Schafts 2 durch einen Befestigungsmechanismus gesichert, wobei der Befestigungsmechanismus eine in das untere Schaftende 4 eingeschraubte Schraube 13 umfasst.

Unter Einwirkung der axialen Kraft Kₐ auf das obere Schaftende 3 werden beide Bewegungsabschnitte 14 und 15 zusammen geschoben, wodurch sich der axiale der Abstand zwischen dem oberen Abstützelement 6a der oberen Abstützung 6 und dem unteren Abstützelement 7a der unteren Abstützung 7, zwischen denen die Spreizelemente 8 angeordnet sind, verringert. Aufgrund der radialen Verschiebbarkeit der Spreizelemente 8 wird die axiale Kraft Kₐ wie eingangs erläutert in eine radiale Kraft Kᵣ umgewandelt, durch welche die Spreizelemente 8 radial nach aussen verschoben werden.

Wenn das mit einer rotatorischen Antriebsmaschine drehfest verbundene obere Schaftende 3 in Rotation versetzt und die axiale Kraft Kₐ in die axiale Richtung A ausgeübt wird, werden die somit radial nach aussen getriebenen Spreizelemente 8 mit ihren Scheidzähnen 9 in die Wand des Bohrlochs gedrückt und erzeugen im Bohrloch Querrillen.

Figur 5a zeigt eine zweite Ausführungsform eines erfindungsgemässen Hinterschneidwerkzeugs 1c in einer Querschnittsdarstellung in der zweiten Variante der Erfindung.

Der Schaft 2 setzt sich aus einem oberen Schaftabschnitt 2a und einem unteren Schaftabschnitt 2b zusammen, die teleskopartig entlang der Längsachse L ineinander schiebbar sind. Der obere Schaftabschnitt 2a bildet mit dem oberen Schaftende 3 und der oberen Abstützung 6 den ersten Bewegungsabschnitt 14. Der untere Schaftabschnitt 2b bildet hingegen mit dem unteren Schaftende 4 und der unteren Abstützung 7 den zweiten Bewegungsabschnitt 15. Die unteren Abstützung 7 ist mittels der Schraube 13 axial mit dem Abnahmebereich 5 fixiert.

Der untere Schaftabschnitt 2b ist axial mit einer ebenfalls dem zweiten Bewegungsabschnitt 15 zugeordneten Abstützschulter 18 gekoppelt, die den unteren Schaftabschnitt 2b in einem Bereich oberhalb der oberen Abstützung 6 radial derart umgibt, dass der zweite Bewegungsabschnitt 15 mittels der Abstützschulter 18 an einer das Bohrloch umgebenden Oberfläche zur Vermeidung einer axialen Verschiebung des zweiten Bewegungsabschnitts 15 in die axiale Richtung A abstützbar ist. Zwischen der Abstützschulter 18 und dem restliche unteren Schaftabschnitt 2b ist ein radiales Kugellager 28 vorgesehen, so dass die Abstützschulter 18 vom restlichen Hinterschneidwerkzeug 1c rotatorisch entkoppelt ist und somit stillstehend auf der Oberfläche, die das Bohrloch umgibt, bei sich drehendem Hinterschneidwerkzeug 1c aufliegen kann. Das untere Schaftende 4, die untere Abstützung 7, der dem zweiten Bewegungsabschnitt 15 zugeordnete Aufnahmebereich 5 mit den ihn umgebenden Spreizelementen 8, die darauf angeordneten Schneidzähne 9 und die obere Abstützung 6 sind - als unterhalb der Abstützschulter 18 angeordnete Elemente - in das Bohrloch einführbar, wie in Figur 5a gezeigt. Der obere Schaftabschnitt 2a besitzt einen sich entlang der Längsachse L erstreckenden zylindrischen, stiftartigen Zapfen 17. Dieser Zapfen 17 ist axial verschiebbar im Schaft 2 gelagert und durch die Abstützschulter 18 zur axialen Kopplung des oberen Schaftendes 3 mit der oberen Abstützung 6 hindurchgeführt. Der Zapfen 17 ist somit dem ersten Bewegungsabschnitt 14 zugeordnet, also gemeinsam mit dem oberen Schaftende 3 axial verschiebbar. Die Spreizelemente 8 sind drehungsübertragend mit dem oberen Schaftende 3 gekoppelt, so dass eine Rotation des oberen Schaftendes 3 zu einer Rotation der Spreizelemente 8 führt. Diese rotatorische Kopplung kann durch eine entsprechende Formgebung des Innenquerschnitts der Spreizelemente 8 und des Aussenquerschnitts des Aufnahmebereichs 5 oder durch die schrägen Stirnflächen 10 und 11 sowie eine rotatorische Kopplung des oberen Abstützelements 6a und/oder des unteren Abstützelements 7a erfolgen. Der untere Schaftabschnitt 2b ist im Bereich der Abstützschulter 18 entlang der geometrischen Längsachse L hohl ausgebildet. Der stiftartige Zapfen 17 ist im Inneren des unteren Schaftabschnitts 2b axial verschiebbar geführt. Der Zapfen 17 ist über einen Schlitz 19 im unteren Schaftabschnitt 2b und mittels eines Querbolzens 20, der den Zapfen 17 mit der oberen Abstützung 6 verbindet, mit der oberen Abstützung 6 gekoppelt. In anderen Worten ist die obere Abstützung 6 axial verschiebbar auf dem Schaft 2 gelagert und gemeinsam mit dem oberen Schaftabschnitt 2a und somit dem oberen Schaftende 3 axial verschiebbar. Somit wird eine axiale Verschiebung des teleskopartigen Schafts 2 oberhalb der feststehenden Abstützschulter 18 auf den Bereich unterhalb der Abstützschulter 18 übertragen. Somit ist es möglich, die in das Bohrloch eingeführten Spreizelemente 8 unterhalb der Abstützschulter 18 axial zu komprimieren und somit ein radiales Auseinanderdrängen der Spreizelemente 8 zur Erzeugung der Querrillen im Bohrloch zu bewirken.

In andern Worten ist der Schaft 2 in einem Teilbereich entlang der geometrischen Längsachse L als ein Hohlkörper mit einer sich in axialer Richtung A erstreckenden Wand 27 und einem oberen Wandende 26 so ausgebildet, dass der stabförmige Zapfen 17 in axialer Richtung A in den als Hohlkörper ausgebildeten Bereich des Schafts 2 eingeführt ist. Dem oberen Schaftabschnitt 2a zugeordnet ist des Weiteren die hülsenförmige obere Abstützung 6. Diese hülsenförmige obere Abstützung 6 umgibt den unteren Schaftabschnitt 2b und ist, vorzugsweise drehfest, mit dem Zapfen 17 verbunden, beispielsweise mittels des Querbolzens, wie in den Figuren 5a und 5b angedeutet. Durch das Ausüben der axialen Kraft Kₐ auf das obere Schaftende 3 in axialer Richtung A wird die axiale Verschiebung des oberen Schaftabschnitts 2a zusammen mit der hülsenförmige obere Abstützung 6 in Richtung der unteren Abstützung 7 bewirkt, wodurch der Abstand zwischen der oberen Abstützung 6 und der unteren Abstützung 7 verringerbar ist.

Zusätzlich sind vorzugsweise ein unterer Bereich des oberen Schaftabschnitts 2a zusammen mit einem oberen Teilabschnitt des unteren Schaftabschnitts 2b und dem stabförmigen Zapfen 17 in einem gemeinsamen Bereich entlang der geometrischen Längsachse L radial von einer Hülse 22 mit einer unteren Hülsenöffnung umgeben. Dabei bildet die Hülse 22 eine Aufnahmeöffnung 23 mit einem oberen Abschluss 24, in welche die Wand 27 des in einem Teilbereich entlang der geometrischen Längsachse L als Hohlkörper ausgebildeten unteren Schaftabschnitts 2b eingreifen kann. Vorzugsweise ist eine der komprimierend auf die Spreizelemente 8 wirkenden Axialkraft Kₐ entgegenwirkende Kraft erzeugbar. Die rotatorische Kopplung zwischen der Hülse 22, dem oberen Schaftende 3, der Wand 27 bzw. Zapfen 17, also zwischen dem oberen Schaftabschnitt 2a und dem unteren Schaftabschnitt 2b, erfolgt beispielsweise durch eine 6-Kant-Form der entsprechenden Elemente.

Gemäss der in Figur 5a dargestellten zweite Ausführungsform des erfindungsgemässen Hinterschneidwerkzeugs 1c in der zweiten Variante ist die entgegenwirkende Kraft durch eine Feder 21 hervorrufbar, die zwischen dem oberen Wandende 26 der Wand 27 des in einem Bereich als Hohlkörper ausgebildeten unteren Schaftabschnitts 2b und dem oberen Abschluss 24 der Aufnahmeöffnung 23 angeordnet ist.

In anderen Worten sind der obere Schaftabschnitt 2a und der untere Schaftabschnitt 2b in einem Bereich oberhalb der Abstützschulter 18 teleskopartig und axial innerhalb einer Hülse 22 ineinander schiebbar, wobei in dieser Hülse 22 die die beiden Schaftabschnitte 2a und 2b axial auseinander drückende Feder 21 angeordnet ist. Ebenfalls innerhalb dieser Hülse 22 verbindet der Zapfen 17 das obere Schaftende 3 sowie den oberen Schaftabschnitt 2a axial mit der oberen Abstützung 6.

Figur 5b zeigt eine dritte Ausführungsform des erfindungsgemässen Hinterschneidwerkzeugs 1d in einer Querschnittsdarstellung in der zweiten Variante. Diese dritte Ausführungsform unterscheidet sich von der in Figur 5a gezeigten zweiten Ausführungsform lediglich bezüglich des Aufbaus der teleskopischen Ineinanderschiebbarkeit des oberen Schaftabschnitts 2a und des unteren Schaftabschnitts 2b im Bereich oberhalb der mittels des Kugellagers 28 gelagerten Abstützschulter 18, weshalb im Folgenden lediglich auf die Unterschiede zur Figur 5a eingegangen wird und ansonsten auf die vorangegangene Figurenbeschreibung Bezug genommnen wird. Gemäss der in Figur 5b dargestellten Ausführungsform des erfindungsgemässen Hinterschneidwerkzeugs 1d ist die entgegenwirkende Kraft durch eine in einem radial erweiterten Bereich 25 der Hülsenöffnung 23 angeordnete Feder 21 hervorrufbar. Im Gegensatz zur Figur 5a ist die Feder hierbei in einem unteren Bereich der Hülse 22 angeordnet. Der obere Schaftabschnitt 2a und der untere Schaftabschnitt 2b ist in der Hülse 22 in einem Bereich oberhalb der Abstützschulter 18 teleskopartig und axial innerhalb einer Hülse 22 ineinander schiebbar, wobei in dieser Hülse 22 die die beiden Schaftabschnitte 2a und 2b axial auseinander drückende Feder 21 angeordnet ist und der Zapfen 17 das obere Schaftende 3 sowie den oberen Schaftabschnitt 2a axial mit der oberen Abstützung 6 verbindet.

Das Hinterscheidwerkzeug 1c oder 1d wird in das Bohrloch eingeführt, bis die Abstützschulter 18 an der Oberfläche um das Bohrloch abgestützt wird, wodurch wiederum ein Arbeitsanschlag definiert wird.

Durch Ausübung der Axialkraft Kₐ auf den oberen Schaftabschnitt 2a wird der obere Schaftabschnitt 2a zusammen mit der oberen Abstützung 6 in Richtung der unteren Abstützung 7 in die axiale Richtung A axial verschoben, wodurch eine komprimierende Kraft auf die zwischen den Abstützungen 6 und 7 angeordneten Spreizelemente 8 ausgeübt wird und die Spreizelemente 8 radial nach aussen verschoben werden. Wenn das obere Schaftende 3 drehfest mit einer rotatorischen Antriebsmaschine verbunden ist und in Rotation versetzt wird, werden durch die radial nach aussen getriebenen Spreizelemente 8 mit den von ihnen getragenen Schneidzähnen 9 in dem Bohrloch Querrillen erzeugt. Nach Beendigung der Einwirkung der komprimierend auf die Spreizelemente 8 wirkenden Axialkraft Kₐ kann die Rückkehr der Spreizelemente in ihre Ausgangsposition bzw. Ruheposition durch Einwirkung einer Gegenkraft beschleunigt werden, wobei die Gegenkraft beispielsweise durch Einwirkung der Feder 21 erzeugbar ist.

Die Ausführungsbeispiele dienen lediglich zur allgemeinen Erläuterung der Erfindung, wobei sich die Erfindung nicht auf diese Ausführungsbeispiele und deren Merkmalskombinationen beschränkt. Eine Kombination der Merkmale der einzelnen Ausführungsbeispiele sowie der Merkmalsgruppen wird ebenfalls von der Erfindung erfasst.

## Patentansprüche

1. Hinterschneidwerkzeug (1a; 1b; 1c; 1d) zur Erzeugung von Querrillen in einem Bohrloch, wobei das Hinterschneidwerkzeug eine geometrische Längsachse (L) mit einer axialen Richtung (A) und einer entgegengesetzten axialen Richtung (A') aufweist, mit
• einem Schaft (2), der
□ ein oberes Schaftende (3), das drehfest mit einer rotatorischen Antriebsmaschine, insbesondere einer Bohrmaschine, zum Versetzen des Schafts (2) in Rotation um die Längsachse (L) verbindbar ist und in die entgegengesetzte axiale Richtung (A') weist,
□ ein unteres Schaftende (4), das dem oberen Schaftende (3) axial gegenüberliegt und in die axiale Richtung (A) weist, und
□ einen zwischen dem oberen Schaftende (3) und dem unteren Schaftende (4) liegenden Aufnahmebereich (5)
aufweist,
• einer oberen Abstützung (6), die den Aufnahmebereich (5) in der entgegengesetzten axialen Richtung (A') begrenzt,
• einer unteren Abstützung (7), die axial zur oberen Abstützung (6) beabstandet ist, den Aufnahmebereich (5) in der axialen Richtung (A) begrenzt und insbesondere am unteren Schaftende (4) angeordnet ist,
• mindestens zwei als hülsenförmige Hohlkörper ausgebildeten Spreizelementen (8), die axial verteilt im Aufnahmebereich (5) angeordnet sind und jeweils den Aufnahmebereich (5) rings umschliessen, wobei zwischen den Spreizelementen (8) und dem Aufnahmebereich (5) des Schafts (2) jeweils ein radiales Spiel in jeweiliger radialer Richtung (R1; R2) senkrecht zur Längsachse (L) besteht und die Spreizelemente (8) jeweils mindestens einen im Wesentlichen radial nach aussen in die jeweilige radiale Richtung (R1; R2) weisenden Schneidzahn (9) aufweisen,
**dadurch gekennzeichnet, dass**
• der Schaft (2) derart ausgebildet ist und die obere Abstützung (6) und die untere Abstützung (7) derart angeordnet sind, dass der axiale Abstand zwischen der oberen Abstützung (6) und der unteren Abstützung (7) durch Ausüben einer in die axiale Richtung (A) gerichteten axialen Kraft (Kₐ) auf das obere Schaftende (3), insbesondere rückfedernd, verringerbar ist,
• die Spreizelemente (8) axial verschiebbar zwischen der oberen Abstützung (6) und der unteren Abstützung (7) verdrehgesichert im Aufnahmebereich (5) angeordnet sind, wobei die axiale Verschiebbarkeit durch die obere Abstützung (6) in die entgegengesetzte axiale Richtung (A') und durch die untere Abstützung (7) in die axiale Richtung (A) begrenzt ist, und
• die Spreizelemente (8) jeweils eine in die entgegengesetzte axiale Richtung (A') weisende schräge obere Stirnfläche (10) und eine in die axiale Richtung (A) weisende schräge untere Stirnfläche (11) aufweisen, wobei die schrägen Stirnflächen (10, 11) jeweils eine derartige, sich in zur Längesachse (L) nicht-senkrechter Richtung erstreckende äussere geometrische Form aufweisen, dass sich durch das Verringern des axialen Abstands zwischen der oberen Abstützung (6) und der unteren Abstützung (7) jeweils benachbarte Spreizelemente (8) in im Wesentlichen entgegengesetzte radiale Richtungen (R1, R2) mittels des radialen Spiels verschieben und die axiale Kraft (Kₐ) jeweils in eine radiale Kraft (Kᵣ) in die radialen Richtungen (R1, R2) umgewandelt wird.

2. Hinterschneidwerkzeug (1a; 1b; 1c; 1d) nach Anspruch 1,
**dadurch gekennzeichnet, dass**
• die Spreizelemente (8) als beidseitig schräg abgeschnittene Zylinder, insbesondere mit einem kreisrunden, ovalen oder mehreckigen Aussenquerschnitt, ausgebildet sind und
• die jeweilige obere Stirnfläche (10) und die jeweilige untere Stirnfläche (11) bezüglich der geometrischen Längsachse (L) in im Wesentlichen zueinander entgegengesetzter Richtung abgeschrägt sind, wobei die Spreizelemente (8) in einem geometrischen Längsschnitt entlang der Längsachse (L) und entlang einer radialen Richtung (R1; R2) im Wesentlichen eine Trapezform aufweisen und der jeweils mindestens eine Schneidzahn (9) auf der breiten Basis (12) des Trapezes angeordnet ist.

3. Hinterschneidwerkzeug (1a; 1b; 1c; 1d) nach Anspruch 2,
**dadurch gekennzeichnet, dass**
die in zur Längesachse (L) nicht-senkrechter Richtung erstreckende äussere geometrische Form der schrägen Stirnflächen (10, 11) jeweils derart ist, dass die obere Stirnfläche (10) und die untere Stirnfläche (11) jeweils um einen gleichen Winkelbetrag (α), aber in zueinander entgegengesetzter Richtung, bezüglich der geometrischen Längsachse (L) gerichtet, abgeschrägt sind.

4. Hinterschneidwerkzeug (1a; 1b; 1c; 1d) nach Anspruch 3,
**dadurch gekennzeichnet, dass**
der Winkelbetrag (α) zwischen der die Stirnflächen (10, 11) durchstossenden Längsachse (L) und der jeweiligen Stirnfläche (10, 11), zwischen 10° und 80°, insbesondere zwischen 45° und 80°, insbesondere zwischen 60° und 75°, insbesondere zwischen 66° und 70°, beträgt.

5. Hinterschneidwerkzeug (1a; 1b; 1c; 1d) nach einem der Ansprüche 1 bis 4, **dadurch gekennzeichnet, dass** sich jeweils gegenüberliegende obere und untere Stirnflächen (10, 11) axial aufeinanderfolgend angeordneter Spreizelemente (8) gegeneinander verschiebbare und sich berührende Gleitflächen bilden.

6. Hinterschneidwerkzeug (1a; 1b; 1c; 1d) nach einem der Ansprüche 1 bis 5, **dadurch gekennzeichnet, dass**
• der von den hülsenförmigen Spreizelementen (8) umgebene Aufnahmebereich (5) einen insbesondere quadratischen, rechteckigen, polygonalen, kreisrunden oder elliptischen Aussenquerschnitt mit einem ersten Aussendurchmesser (D1) senkrecht zur Längsachse (L) und einem zweiten Aussendurchmesser (D2) senkrecht zur Längsachse (L) und senkrecht zum ersten Aussendurchmesser (D1) aufweist,
• die Spreizelemente (8) jeweils einen insbesondere quadratischen, rechteckigen, polygonalen, kreisrunden oder elliptischen Innenquerschnitt mit einem ersten Innendurchmesser (d1) senkrecht zur Längsachse (L) und einem zweiten Innendurchmesser (d2) senkrecht zur Längsachse (L) und senkrecht zum ersten Innendurchmesser (d1) aufweisen,
• der erste Innendurchmesser (d1) grösser ist als der erste Aussendurchmesser (D1) und
• der zweite Innendurchmesser (d2) derart wesentlich grösser ist als der zweite Aussendurchmesser (D2), dass das radiale Spiel in der jeweiligen radialen Richtung (R1; R2) senkrecht zur Längsachse (L), welches die radiale Verschiebbarkeit der Spreizelemente (8) ermöglicht, gebildet wird.

7. Hinterschneidwerkzeug (1a; 1b; 1c; 1d) nach Anspruch 6,
**dadurch gekennzeichnet, dass**
der Aussenquerschnitt des Aufnahmebereichs (5) und der jeweilige Innenquerschnitt der Spreizelemente (8) rechteckig sind.

8. Hinterschneidwerkzeug (1a; 1b; 1c; 1d) nach einem der Ansprüche 1 bis 7,
**dadurch gekennzeichnet, dass**
der jeweilige mindestens eine Schneidzahn (9) aus einem harten Material, insbesondere aus Hartmetall, Schellarbeitsstahl, Keramik, Saphir oder Diamant, besteht und/oder einstückig mit dem jeweiligen Spreizelement (8) ausgebildet ist.

9. Hinterschneidwerkzeug (1a; 1b; 1c; 1d) nach einem der Ansprüche 1 bis 8,
**dadurch gekennzeichnet, dass**
• die untere Abstützung (7) - in die axiale Richtung (A) abschiebbar lösbar - mit dem unteren Schaftende (4), insbesondere mittels einer in das untere Schaftende (4) eingeschraubten Schraube (13), axialfest verbunden ist und
• die Spreizelemente (8) auf den Aufnahmebereich (5) aufgeschoben und von diesem entfernbar sind und gegen ein Abfallen von dem Aufnahmebereich (5) in die axiale Richtung (A) durch die lösbare untere Abstützung (7) gesichert sind.

10. Hinterschneidwerkzeug (1a; 1b; 1c; 1d) nach einem der Ansprüche 1 bis 9,
**dadurch gekennzeichnet, dass**
das Hinterschneidwerkzeug (1a; 1b; 1c; 1d)
• einen ersten Bewegungsabschnitt (14) mit
□ dem oberen Schaftende (3) und
□ der obere Abstützung (6)
und
• einen zweiten Bewegungsabschnitt (15) mit
□ der unteren Abstützung (7)
umfasst, wobei der erste Bewegungsabschnitt (14) und der zweite Bewegungsabschnitt (15) zum Verändern des axialen Abstands zwischen der oberen Abstützung (6) und der unteren Abstützung (7) axial zueinander verschiebbar sind und der zweite Bewegungsabschnitt (15) mit dem Bohrloch axial in der axialen Richtung (A) koppelbar ist.

11. Hinterscheidwerkzeug (1a; 1b; 1c; 1d) nach Anspruch 10, **dadurch gekennzeichnet, dass**
• die obere Abstützung (6) axial mit dem Schaft (2) gekoppelt ist und der Schaft (2) dem ersten Bewegungsabschnitt (14) zugeordnet ist,
• die untere Abstützung (7) mit einer unteren Abstützhülse (16), die
□ am unteren Schaftende (4) angeordnet ist,
□ dem zweiten Bewegungsabschnitt (15) zugeordnet ist und
□ auf dem Boden des Bohrlochs abstützbar ist, axial gekoppelt ist oder von der unteren Abstützhülse (16) gebildet wird, und
• das untere Schaftende (4) in axialer Richtung (A) in die Abstützhülse (16) derart hineinschiebbar ist, dass der axiale Abstand zwischen der oberen Abstützung (6) und der unteren Abstützung (7) durch Ausüben der axialen Kraft (Kₐ) auf das obere Schaftende (3) und Hineinschieben des unteren Schaftendes (4) in die den Schaft (2) radial umgebende untere Abstützung (7) und in die Abstützhülse (16) verringerbar ist.

12. Hinterschneidwerkzeug (1a; 1b) nach Anspruch 10,
**dadurch gekennzeichnet, dass**
• sich der Schaft (2) aus einem oberen Schaftabschnitt (2a) und einem unteren Schaftabschnitt (2b) zusammensetzt, die insbesondere teleskopartig entlang der Längsachse (L) ineinanderschiebbar sind,
• der oberen Schaftabschnitt (2a) mit dem oberen Schaftende (3) und der oberen Abstützung (6) den ersten Bewegungsabschnitt (14) bildet und
• der untere Schaftabschnitt (2b) mit dem unteren Schaftende (4) und der unteren Abstützung (7) den zweiten Bewegungsabschnitt (15) bildet.

13. Hinterschneidwerkzeug (1c; 1d) nach Anspruch 12,
**dadurch gekennzeichnet, dass**
• der untere Schaftabschnitt (2b) axial mit einer dem zweiten Bewegungsabschnitt (15) zugeordneten Abstützschulter (18) gekoppelt ist, die den unteren Schaftabschnitt (2b) in einem Bereich oberhalb der oberen Abstützung (6) radial derart umgibt, dass der zweite Bewegungsabschnitt (15) mittels der Abstützschulter (18) an einer das Bohrloch umgebenden Oberfläche zur Vermeidung einer axialen Verschiebung des zweiten Bewegungsabschnitts (15) in die axiale Richtung (A) abstützbar ist,
• das untere Schaftende (4), die untere Abstützung (7), der dem zweiten Bewegungsabschnitt (15) zugeordnete Aufnahmebereich (5) mit den ihn umgebenden Spreizelementen (8) und insbesondere die obere Abstützung (6) in das Bohrloch einführbar sind,
• der obere Schaftabschnitt (2a) einen sich entlang der Längsachse (L) erstreckenden Zapfen (17), der axial verschiebbar durch die Abstützschulter (18) zur axialen Kopplung des oberen Schaftendes (3) mit der oberen Abstützung (6) hindurchgeführt ist und dem ersten Bewegungsabschnitt (14) zugeordnet ist, aufweist und
• die Spreizelemente (9) drehungsübertragend mit dem oberen Schaftende (3) gekoppelt sind.

14. Hinterschneidwerkzeug (1c; 1d) nach Anspruch 13,
**dadurch gekennzeichnet, dass**
• der untere Schaftabschnitt (2b) zumindest im Bereich der Abstützschulter (18) entlang der geometrischen Längsachse (L) hohl ausgebildet ist,
• der Zapfen (17) im Inneren des unteren Schaftabschnitts (2b) axial verschiebbar geführt ist und
• der Zapfen (17) über einen Schlitz (19) im unteren Schaftabschnitt (2b) - und insbesondere mittels eines den Zapfen (17) mit der oberen Abstützung (6) verbindenden Querbolzens (20) - mit der oberen Abstützung (6) gekoppelt ist.

15. Hinterschneidwerkzeug (1c; 1d) nach einem der Ansprüche 10 bis 14,
**dadurch gekennzeichnet, dass**
zwischen dem ersten Bewegungsabschnitt (14) und dem zweiten Bewegungsabschnitt (15), insbesondere zwischen dem oberen Schaftabschnitt (2a) und dem unteren Schaftabschnitt (2b), eine axial wirkende Feder (21) angeordnet ist, die der in die axiale Richtung (A) gerichteten axialen Kraft (Kₐ) auf das obere Schaftende (3) entgegenwirkt und die Bewegungsabschnitte (14, 15) in eine Ausgangsstellung, in welcher der axiale Abstand zwischen der oberen Abstützung (6) und der unteren Abstützung (7) maximal ist, drückt.

## Claims

1. Undercutting tool (1a; 1b; 1c; 1d) for producing transverse grooves in a drilled hole, the undercutting tool having a geometric longitudinal axis (L) having an axial direction (A) and an inverse axial direction (A'), comprising
• a shank (2), which has
o an upper shank end (3), which can be connected in a rotationally fixed manner to a rotatory drive machine, in particular a power drill, for the purpose of causing the shank (2) to rotate about the longitudinal axis (L), and which faces in the inverse axial direction (A'),
o a lower shank end (4), which is axially opposite the upper shank end (3) and faces in the axial direction (A), and
o a receiving region (5) located between the upper shank end (3) and the lower shank end (4),
• an upper support (6), which delimits the receiving region (5) in the inverse axial direction (A'),
• a lower support (7), which is spaced apart axially from the upper support (6), delimits the receiving region (5) in the axial direction (A) and, in particular, is disposed at the lower shank end (4),
• at least two spreading elements (8), realized as sleeve-type hollow bodies, which are disposed in an axially distributed manner in the receiving region (5), and which each encompass the receiving region (5), there being in each case, between the spreading elements (8) and the receiving region (5) of the shank (2), a radial play in a respective radial direction (R1; R2), perpendicularly in relation to the longitudinal axis (L), and the spreading elements (8) each having at least one cutting tooth (9) facing substantially radially outward in a respective radial direction (R1; R2),
**characterized in that**
• the shank (2) is realized in such a way, and the upper support (6) and the lower support (7) are disposed in such a way that the axial distance between the upper support (6) and the lower support (7) can be reduced, by exerting an axial force (Kₐ), directed in the axial direction (A), upon the upper shank end (3), in particular in a resilient manner,
• the spreading elements (8) are disposed in the receiving region (5) so as to be secured against rotation and axially displaceable between the upper support (6) and the lower support (7), the axial displaceability being delimited in the inverse axial direction (A') by the upper support (6) and in the axial direction (A) by the lower support (7), and
• the spreading elements (8) each have an oblique upper end face (10) that faces in the inverse axial direction (A'), and an oblique lower end face (11) that faces in the axial direction (A), the oblique end faces (10, 11) each having such an outer geometric shape, extending in a direction not perpendicular to the longitudinal axis (L), that, as a result of the axial distance between the upper support (6) and the lower support (7) being reduced, respectively adjacent spreading elements (8) are displaced in substantially opposite radial directions (R1, R2) by means of the radial play, and the axial force (Kₐ) is in each case converted to a radial force (Kᵣ) in the radial directions (R1, R2).

2. Undercutting tool (1a; 1b; 1c; 1d) according to Claim 1, **characterized in that**
• the spreading elements (8) are realized as cylinders cut off obliquely on both sides, in particular having a circular, oval or polygonal outer cross-section, and
• the respective upper end face (10) and the respective lower end face (11) are beveled, in respect of the geometric longitudinal axis (L), in substantially opposite directions in relation to one another, the spreading elements (8) having substantially a trapezoidal shape in a geometric longitudinal section along the longitudinal axis (L) and along a radial direction (R1; R2), and the respectively at least one cutting tooth (9) being disposed on the broad base (12) of the trapezium.

3. Undercutting tool (1a; 1b; 1c; 1d) according to Claim 2, **characterized in that**
in each case, the outer geometric shape of the oblique end faces (10, 11), extending in a direction not perpendicular to the longitudinal axis (L), is such that the upper end face (10) and the lower end face (11) are each beveled by the same angular amount (α), but in mutually opposite directions, in respect of the geometric longitudinal axis (L).

4. Undercutting tool (1a; 1b; 1c; 1d) according to Claim 3, **characterized in that**
the angular amount (α), between the longitudinal axis (L), which pierces the end faces (10, 11), and the respective end face (10, 11) is between 10° and 80°, in particular between 45° and 80°, in particular between 60° and 75°, in particular between 66° and 70°.

5. Undercutting tool (1a; 1b; 1c; 1d) according to any one of Claims 1 to 4, **characterized in that** respectively opposing upper and lower end faces (10, 11) of spreading elements (8) disposed in axial succession constitute mutually contacting slide surfaces that are displaceable against each other.

6. Undercutting tool (1a; 1b; 1c; 1d) according to any one of Claims 1 to 5, **characterized in that**
• the receiving region (5) surrounded by the sleeve-type spreading elements (8) has an, in particular, square, rectangular, polygonal, circular or elliptical outer cross-section, having a first outer diameter (D1) perpendicularly in relation to the longitudinal axis (L), and having a second outer diameter (D2) perpendicularly in relation to the longitudinal axis (L) and perpendicularly in relation to the first outer diameter (D1),
• the spreading elements (8) each have an, in particular, square, rectangular, polygonal, circular or elliptical inner cross-section, having a first inner diameter (d1) perpendicularly in relation to the longitudinal axis (L), and having a second inner diameter (d2) perpendicularly in relation to the longitudinal axis (L) and perpendicularly in relation to the first inner diameter (d1),
• the first inner diameter (d1) is larger than the first outer diameter (D1), and
• the second inner diameter (d2) is significantly larger than the second outer diameter (D2), so as to constitute the radial play in the respective radial direction (R1; R2), perpendicularly in relation to the longitudinal axis (L), which play enables the spreading elements (8) to be displaced radially.

7. Undercutting tool (1a; 1b; 1c; 1d) according to Claim 6, **characterized in that**
the outer cross-section of the receiving region (5) and the cross-section of each of the spreading elements (8) are rectangular.

8. Undercutting tool (1a; 1b; 1c; 1d) according to any one of Claims 1 to 7 , **characterized in that** the respective at least one cutting tooth (9) is made of hard material, in particular of hard metal, high-speed steel, ceramic, sapphire or diamond, and/or is realized so as to be integral with the respective spreading element (8).

9. Undercutting tool (1a; 1b; 1c; 1d) according to any one of Claims 1 to 8, **characterized in that**
• the lower support (7) - which is detachable by being pushed off in the axial direction (A) - is connected in an axially fixed manner to the lower shank,end (4), in particular by means of a screw (13) screwed into the lower shank end (4), and
• the spreading elements (8) are pushed onto the receiving region (5) and are removable from the latter, and are secured by the detachable lower support (7) against falling down from the receiving region (5) in the axial direction (A).

10. Undercutting tool (1a; 1b; 1c; 1d) according to any one of Claims 1 to 9 , **characterized in that** the undercutting tool (1a; 1b; 1c; 1d) comprises
• a first movement portion (14) comprising
o the upper shank end (3) and
o the upper support (6)
and
• a second movement portion (15), comprising
o the lower support (7),
the first movement portion (14) and the second movement portion (15) being axially displaceable in relation to one another for the purpose of varying the axial distance between the upper support (6) and the lower support (7), and the second movement portion (15) can be coupled axially to the drilled hole in the axial direction (A).

11. Undercutting tool (1a; 1b; 1c; 1d) according to Claim 10, **characterized in that**
• the upper support (6) is coupled axially to the shank (2), and the shank (2) is assigned to the first movement portion (14),
• the lower support (7) is coupled axially to a lower support sleeve (16), which
o is disposed at the lower shank end (4),
o is assigned to the second movement portion (15) and
o can be supported on the bottom of the drilled hole,
or is constituted by the lower support sleeve (16), and
• the lower shank end (4) can be pushed into the support sleeve (16) in the axial direction (A) in such a way that the axial distance between the upper support (6) and the lower support (7) can be reduced by exerting the axial force (Kₐ) upon the upper shank end (3) and pushing the lower shank end (4) into the lower support (7) that radially surrounds the shank (2) and into the support sleeve (16).

12. Undercutting tool (1a; 1b) according to Claim 10,
**characterized in that**
• the shank (2) is composed of an upper shank portion (2a) and a lower shank portion (2b), which can be pushed into one another, in particular in a telescopic manner, along the longitudinal axis (L),
• the upper shank portion (2a), with the upper shank end (3) and the upper support (6), constitutes the first movement portion (14), and
• the lower shank portion (2b), with the lower shank end (4) and the lower support (7), constitutes the second movement portion (15).

13. Undercutting tool (1c; 1d) according to Claim 12,
**characterized in that**
• the lower shank portion (2b) is coupled axially to a support shoulder (18), which is assigned to the second movement portion (15) and which, in a region above the upper support (6), surrounds the lower shank portion (2b) radially in such a way that the second movement portion (15), by means of the support shoulder (18), can be supported on a surface surrounding the drilled hole, in order to prevent the second movement portion (15) from being displaced in the axial direction (A),
• the lower shank end (4), the lower support (7), the receiving region (5) assigned to the second movement portion (15), with the spreading elements (8) surrounding the receiving region and, in particular, the upper support (6) can be inserted into the drilled hole,
• the upper shank portion (2a) has a pin (17), which extends along the longitudinal axis (L) and goes through the support shoulder (18) in an axially displaceable manner for the purpose of axially coupling the upper shank end (3) to the upper support (6), and which is assigned to the first movement portion (14), and
• the spreading elements (9) are coupled to the upper shank end (3) in a rotation-transferring manner.

14. Undercutting tool (1c; 1d) according to Claim 13,
**characterized in that**
• the lower shank portion (2b) is realized so as to be hollow, at least in the region of the support shoulder (18), along the geometric longitudinal axis (L),
• the pin (17) is guided so as to be axially displaceable inside the lower shank portion (2b), and
• the pin (17) is coupled to the upper support (6) via a slot (19) in the lower shank portion (2b) - and, in particular, by means of a transverse bolt (20), which connects the pin (17) to the upper support (6).

15. Undercutting tool (1c; 1d) according to any one of Claims 10 to 14,
**characterized in that**
disposed between the first movement portion (14) and the second movement portion (15), in particular between the upper shank portion (2a) and the lower shank portion (2b), there is an axially acting spring (21), which opposes the axial force (Kₐ) directed in the axial direction (A) onto the upper shank end (3), and which presses the movement portions (14, 15) into an initial position, in which the axial distance between the upper support (6) and the lower support (7) is maximal.

## Revendications

1. Outil de coupe pour contre-dépouille (1a ; 1b ; 1c ; 1d) pour produire des rainures transversales dans un trou de perçage, l'outil de coupe pour contre-dépouille présentant un axe longitudinal géométrique (L) avec un sens axial (A) et un sens axial opposé (A'), avec
• une tige (2) qui
□ présente une extrémité supérieure de tige (3) qui peut être reliée de façon résistante à la torsion à un mécanisme d'entraînement rotatif, en particulier une perceuse, pour mettre la tige (2) en rotation autour de l'axe longitudinal (L) et qui est tournée dans le sens axial opposé (A'),
□ une extrémité inférieure de tige (4) qui est située axialement en face de l'extrémité supérieure de tige (3) et qui est tournée dans le sens axial (A) et
□ une zone de réception (5) située entre l'extrémité supérieure de tige (3) et l'extrémité inférieure de tige (4),
• un appui supérieur (6) qui délimite la zone de réception (5) dans le sens axial opposé (A'),
• un appui inférieur (7) qui est espacé axialement de l'appui supérieur (6), qui délimite la zone de réception (5) dans le sens axial (A) et qui est placé en particulier à l'extrémité inférieure de la tige (4),
• au moins deux éléments d'écartement (8) configurés comme des corps creux en forme de douille qui sont placés en étant répartis axialement dans la zone de réception (5) et qui entourent respectivement la zone de réception (5) tout autour, cependant qu'il y a un jeu radial respectivement entre les éléments d'écartement (6) et la zone de réception (5) de la tige (2) dans le sens respectivement radial (R1 ; R2) perpendiculairement à l'axe longitudinal (L) et que les éléments d'écartement (8) présentent respectivement au moins une dent de coupe (9) orientée substantiellement radialement vers l'extérieur dans le sens radial respectif (R1 ; R2),
**caractérisé en ce que**
• la tige (2) est configurée de telle manière et l'appui supérieur (6) et l'appui inférieur (7) sont placés de telle manière que la distance axiale entre l'appui supérieur (6) et l'appui inférieur (7) peut être réduit en exerçant une force axiale (Kₐ) sur l'extrémité supérieure de tige (3), en particulier à rappel élastique,
• les éléments d'écartement (8) sont placés dans la zone de réception (5) déplaçables axialement entre l'appui supérieur (6) et l'appui inférieur (7) en étant bloqués contre la torsion, la mobilité axiale étant limitée par l'appui supérieur (6) dans le sens axial opposé (A') et par l'appui inférieur (7) dans le sens axial (A) et
• les éléments d'écartement (8) présentent respectivement une surface frontale supérieure oblique (10) tournée dans le sens axial opposé (A') et une surface frontale inférieure oblique (11) tournée dans le sens axial (A), les surfaces frontales obliques (10, 11) présentant respectivement une telle forme géométrique extérieure qui s'étend dans le sens non perpendiculaire à l'axe longitudinal (L) que des éléments d'écartement (8) respectivement voisins se déplacent par la réduction de la distance axiale entre l'appui supérieur (6) et l'appui inférieur (7) dans des sens radiaux substantiellement opposés (R1, R2) au moyen du jeu radial et la force axiale (Kₐ) est transformée respectivement en force radiale (Kᵣ) dans les sens radiaux (R1, R2).

2. Outil de coupe pour contre-dépouille (1a ; 1 b ; 1 c ; 1d) selon la revendication 1,
**caractérisé en ce que**
• les éléments d'écartement (8) sont configurés comme des cylindres découpés obliques des deux côtés, en particulier avec une section extérieure circulaire, ovale ou polygonale et
• la surface frontale supérieure respective (10) et la surface frontale inférieure respective (11) sont inclinées dans un sens substantiellement opposé l'une à l'autre par rapport à l'axe longitudinal géométrique (L), les éléments d'écartement (8) présentant substantiellement une forme trapézoïdale dans une coupe longitudinale géométrique le long de l'axe longitudinal (L) et le long d'un sens radial (R1 ; R2) et la dent de coupe qui existe respectivement au moins (9) étant placée sur la base large (12) du trapèze.

3. Outil de coupe pour contre-dépouille (1a ; 1b ; 1c ; 1d) selon la revendication 2,
**caractérisé en ce que**
la forme géométrique extérieure des surfaces frontales obliques (10, 11) qui s'étend dans le sens non perpendiculaire à l'axe longitudinal (L) est respectivement telle que la surface frontale supérieure (10) et la surface frontale inférieure (1) sont inclinées respectivement d'une même valeur angulaire (α) mais orientées dans le sens opposé l'une à l'autre par rapport à l'axe longitudinal géométrique (L).

4. Outil de coupe pour contre-dépouille (1a ; 1b ; 1c ; 1d) selon la revendication 3,
**caractérisé en ce que**
la valeur angulaire (α) entre l'axe longitudinal (L) qui traverse les surfaces frontales (10, 11) et la surface frontale respective (10, 11) est entre 10° et 80°, en particulier entre 45° et 60°, en particulier entre 60° et 75°, en particulier entre 66° et 70°.

5. Outil de coupe pour contre-dépouille (1a ; 1b ; 1c ; 1d) selon l'une des revendications 1 à 4,
**caractérisé en ce que**
des surfaces frontales supérieure et inférieure respectivement opposées (10, 11) d'éléments d'écartement (8) placés en se suivant axialement forment des surfaces de glissement qui se déplacent l'une par rapport à l'autre et qui se touchent.

6. Outil de coupe pour contre-dépouille (1a ; 1b ; 1c ; 1d) selon l'une des revendications 1 à 5,
**caractérisé en ce que**
• la zone de réception (5) qui est entourée par les éléments d'écartement en forme de douille (8) présente une section extérieure en particulier carrée, rectangulaire, polygonale, circulaire ou elliptique avec un premier diamètre extérieur (D1) perpendiculaire à l'axe longitudinal (L) et un second diamètre extérieur (D2) perpendiculaire à l'axe longitudinal (L) et perpendiculaire au premier diamètre extérieur (D1),
• les éléments d'écartement (8) présentent une section intérieure en particulier carrée, rectangulaire, polygonale, circulaire ou elliptique avec un premier diamètre intérieur (d1) perpendiculaire à l'axe longitudinal (L) et un second diamètre intérieur (d2) perpendiculaire à l'axe longitudinal (L) et perpendiculaire au premier diamètre intérieur (d1),
• le premier diamètre intérieur (d1) est plus grand que le premier diamètre extérieur (D1) et
• le second diamètre intérieur (d2) est beaucoup plus grand que le second diamètre extérieur (D2) à tel point qu'il se forme le jeu radial dans le sens respectivement radial (R1 ; R2) perpendiculairement à l'axe longitudinal (L) qui permet le déplacement radial des éléments d'écartement (8).

7. Outil de coupe pour contre-dépouille (1a ; 1b ; 1c ; 1d) selon la revendication 6,
**caractérisé en ce que**
la section extérieure de la zone de réception (5) et la section intérieure respective des éléments d'écartement (8) sont rectangulaires.

8. Outil de coupe pour contre-dépouille (1a ; 1b ; 1c ; 1d) selon l'une des revendications 1 à 7,
**caractérisé en ce que** la dent de coupe (9) respective qui existe au moins est en un matériau dur, en particulier en métal dur, en acier à coupe rapide, en céramique, en saphir ou en diamant et/ou est configurée en une pièce avec l'élément d'écartement respectif.

9. Outil de coupe pour contre-dépouille (1a ; 1b ; 1c ; 1d) selon l'une des revendications 1 à 8,
**caractérisé en ce que**
• l'appui inférieur (7) est relié de manière fixe axialement à l'extrémité inférieure de tige (4) - en étant amovible par glissement dans le sens axial (A) au moyen d'une vis (13) vissée dans l'extrémité inférieure de tige (4) et
• les éléments d'écartement (8) sont glissés sur la zone de réception (5) et peuvent être enlevés de celle-ci et sont bloqués pour ne pas tomber de la zone de réception (5) dans le sens axial (A) par l'appui inférieur amovible (7).

10. Outil de coupe pour contre-dépouille (1a ; 1b ; 1c ; 1d) selon l'une des revendications 1 à 9,
**caractérisé en ce que**
• l'outil de coupe pour contre-dépouille (1a ; 1b ; 1c ; 1d) comprend
• une première section de mouvement (14) avec
□ l'extrémité supérieure de tige (3) et
□ l'appui supérieur (6)
et
• une seconde section de mouvement (15) avec
□ l'appui inférieur (7),
la première section de mouvement (14) et la seconde section de mouvement (15) étant déplaçables axialement l'une par rapport à l'autre pour modifier la distance axiale entre l'appui supérieur (6) et l'appui inférieur (7) et la seconde section de mouvement (15) peut être couplée au trou de perçage axialement dans le sens axial (A).

11. Outil de coupe pour contre-dépouille (1a ; 1b ; 1c ; 1d) selon la revendication 10, **caractérisé en ce que**
• l'appui supérieur (6) est couplé axialement à la tige (2) et la tige (2) est affectée à la première section de mouvement (14),
• l'appui inférieur (7) est couplé axialement à une douille d'appui inférieure (16) qui
□ est placée à l'extrémité inférieure de tige (4),
□ est affectée à la seconde section de mouvement (15) et
□ peut s'appuyer sur le fond du trou de perçage, est couplée axialement ou est formée par la douille d'appui inférieure (16) et
• l'extrémité inférieure de tige (4) peut être glissée dans le sens axial (A) à l'intérieur de la douille d'appui (16) de telle manière que la distance axiale entre l'appui supérieur (6) et l'appui inférieur (7) peut être réduite en exerçant la force axiale (Kₐ) sur l'extrémité supérieure de tige (3) et en faisant glisser l'extrémité inférieure de tige (4) dans l'appui inférieur (7) qui entoure radialement la tige (2) et dans la douille d'appui (16).

12. Outil de coupe pour contre-dépouille (1a ; 1b) selon la revendication 10, **caractérisé en ce que**
• la tige (2) se compose d'une section de tige supérieure (2a) et d'une section de tige inférieure (2b) qui peuvent être glissées l'une dans l'autre en particulier de manière télescopique le long de l'axe longitudinal (L),
• la section de tige supérieure (2a) avec l'extrémité supérieure de tige (3) et l'appui supérieur (6) forme la première section de mouvement (14) et
• la section de tige inférieure (2b) avec l'extrémité inférieure de tige (4) et l'appui inférieur (7) forme la seconde section de mouvement (15).

13. Outil de coupe pour contre-dépouille (1c ; 1d) selon la revendication 12, **caractérisé en ce que**
• la section de tige inférieure (2b) est couplée axialement à un épaulement d'appui (18) affecté à la seconde section de mouvement (15) qui entoure la section de tige inférieure (2b) radialement dans une zone au-dessus de l'appui supérieur (6) de telle manière que la seconde section de mouvement (15) peut prendre appui au moyen de l'épaulement d'appui (18) sur une surface qui entoure le trou de perçage pour éviter un déplacement axial de la seconde section de mouvement (15) dans le sens axial (A),
• l'extrémité inférieure de tige (4), l'appui inférieur (7), la zone de réception affectée à la seconde section de mouvement (15) avec les éléments d'écartement (8) qui l'entourent et en particulier l'appui supérieur (6) peuvent être introduits dans le trou de perçage,
• la section de tige supérieure (2a) présente un tourillon (17) qui s'étend le long de l'axe longitudinal (L), qui est déplaçable axialement et traverse l'épaulement d'appui (18) pour le couplage axial de l'extrémité supérieure de tige (3) avec l'appui supérieur (6) et
• les éléments d'écartement (8) sont couplés à l'extrémité supérieure de tige (3) avec transmission de la rotation.

14. Outil de coupe pour contre-dépouille (1c ; 1d) selon la revendication 13, **caractérisé en ce que**
• la section de tige inférieure (2b) est configurée creuse au moins dans la zone de l'épaulement d'appui (18) le long de l'axe longitudinal géométrique (L),
• le tourillon (17) est guidé déplaçable axialement dans l'intérieur de la section de tige inférieure (2b) et
• le tourillon (17) est couplé à l'appui supérieur (6) par l'intermédiaire d'une fente (19) dans la section de tige inférieure (2b) - et en particulier au moyen d'un boulon transversal (20) qui relie le tourillon (17) à l'appui supérieur (6).

15. Outil de coupe pour contre-dépouille (1c ; 1d) selon l'une des revendications 10 à 14,
**caractérisé en ce**
**qu'**un ressort qui agit dans le sens axial (21) est placé entre la première section de mouvement (14) et la seconde section de mouvement (15), en particulier entre la section de tige supérieure (2a) et la section de tige inférieure (2b), ressort qui contre la force axiale (Kₐ) orientée dans le sens axial (A) sur l'extrémité supérieure de tige (3) et pousse les sections de mouvement (14, 15) dans une position de départ dans laquelle la distance axiale entre l'appui supérieur (6) et l'appui inférieur (7) est maximale.
